# EUROPÄISCHE PATENTSCHRIFT

(11) **EP 2 058 186 B1**
(45) Veröffentlichungstag und Bekanntmachung des Hinweises auf die Patenterteilung: **19.10.2011**
(21) Anmeldenummer: 08019444.2
(22) Anmeldetag: 06.11.2008
(51) Int. Cl.: B60T 7/20, B60T 13/68

(54) **Bremsanlage für einen Anhänger eines Kraftfahrzeuges**
Braking assembly for the trailer of a commercial vehicle
Installation de frein pour une remorque d'un véhicule automobile

(30) Priorität: 12.11.2007 DE 102007053764
(43) Veröffentlichungstag der Anmeldung: 13.05.2009
(73) Patentinhaber: Haldex Brake Products GmbH, 69123 Heidelberg (DE)
(72) Erfinder: Sulzyc, Georg, 68535 Edingen-Neckarhausen (DE); Schell, Günter, 69181 Leimen (DE); Maltry, Helmut, 69226 Nussloch (DE); Schering, Christian, 48691 Vreden (DE)
(74) Vertreter: Rehberg Hüppe + Partner

(56) Entgegenhaltungen:
- EP-B1- 0 792 783
- DE-A1- 4 327 759
- DE-U1- 20 122 779
- JP-A- 55 106 852

## Beschreibung

### TECHNISCHES GEBIET DER ERFINDUNG

Die vorliegende Erfindung betrifft eine Bremsanlage für einen Anhänger eines Kraftfahrzeugs gemäß einzelnen Merkmalen des Patentanspruchs 1. Weiterhin betrifft die Erfindung eine Bremsanlage für einen Anhänger eines Kraftfahrzeugs gemäß einzelnen Merkmalen des Patentanspruchs 4 oder 9.

### STAND DER TECHNIK

Aus EP 0 792 783 B1 ist das Problem bekannt, dass bei einer Bremsanlage eines Anhängers eines Kraftfahrzeuges eine Verringerung oder ein Entfall eines Druckes in einer Vorratsleitung auftreten kann, der insbesondere
- durch ein Abkoppeln der Vorratsleitung,
- eine Leckage im Vorratsleitungsstrang,
- einen Abriss einer Vorratsleitung,
- einen Druckeinbruch in dem Zugfahrzeug
- oder einen Unfall
verursacht sein kann. Gemäß dem in EP 0 792 783 B1 dargestellten Ausführungsbeispiel wird in einem derartigen Fall eine Notbremsung ausgelöst, indem automatisiert Betriebsbremszylinder des Anhängers beaufschlagt werden. Folge einer derartigen Notbremsung ist, dass der Anhänger auch anschließend im Stillstand durch die Betriebsbremszylinder gebremst ist. Um eine gesicherte Parkstellung zu gewährleisten, ist in bekannten Bremsanlagen üblicherweise ein Parkventil vorgesehen, welches für eine Parksituation manuell in eine Entlüftungsstellung verbracht werden muss, in welcher eine Entlüftung eines Federspeicherbremszylinders erfolgt. Da allerdings über die Notbremsfunktion bereits die Betriebsbremszylinder druckbeaufschlagt sein können, ist es in der Vergangenheit wiederholt dazu gekommen, dass der Fahrer vergisst, die Entlüftungsstellung des Parkventils manuell herbeizuführen. Dies hat aber zur Folge, dass mit erneutem Einwirken des Vorratsleitungsdruckes infolge eines erneuten Ankoppelns der Vorratsleitung an ein Zugfahrzeug die Notbremsfunktion aufgehoben wird, was eine Entlüftung der Betriebsbremszylinder zur Folge hat. In diesem Zustand ist der Anhänger ohne gebotene vorherige manuelle Betätigung des Parkventils ungebremst, was eine Gefahrensituation herbeiführen kann, die schlimmstenfalls tödlich für den Fahrer sein kann.

Zur Vermeidung dieser Gefahrensituation schlägt EP 0 792 783 B1 ein modifiziertes Parkventil vor, welches eine in an sich bekannter Weise ausgebildete Steuereinheit besitzt, in der ein Ventilelement, hier ein Ventilschieber, in einer Entlüftungsstellung eine zu den Federspeicherbremszylindern führende Leitung entlüftet und in einer Belüftungsstellung eine Belüftung der Federspeicherbremszylinder ermöglicht. Eine Betätigungsfeder beaufschlagt das Ventilelement derart, dass sich dieses in entspanntem Zustand in der Entlüftungsstellung befindet, während die Beaufschlagung der Betätigungsfeder in Richtung der Belüftungsstellung zunimmt. Zur automatischen Herbeiführung einer Parkstellung schlägt die Druckschrift eine automatische Betätigungseinheit vor, die dafür Sorge trägt, dass für ausreichenden Druck in der Vorratsleitung unter Beaufschlagung der Betätigungsfeder das Ventilelement in der Belüftungsstellung ist, in welcher der Federspeicherbremszylinder belüftet ist. Hierzu besitzt die Betätigungseinheit einen Kolben, der vom Druck in der Vorratsleitung beaufschlagt ist. Der druckbeaufschlagte Kolben erzeugt eine Kraft, die für anliegenden Druck in der Vorratsleitung entgegen der Wirkung der Betätigungsfeder das Ventilelement in die Belüftungsstellung hält. Mit Entlüftung der Vorratsleitung entfällt diese Kraft, so dass die Betätigungsfeder das Ventilelement in die Entlüftungsstellung bringt, in der der Federspeicherbremszylinder automatisch entlüftet wird. Dieses ist sowohl in einer Notbremssituation der Fall als auch für ein Abstellen des Anhängers mit Abkoppeln der Vorratsleitung. Mit Eintritt einer Notbremssituation wird eine maximale Bremswirkung erzielt, welche ein Blockieren der Räder des Anhängers zur Folge hat, was einen unkontrollierten Bewegungszustand des Anhängers zur Folge haben kann.

Kurz zusammengefasst basiert EP 0 792 783 B1 somit auf dem Grundgedanken, neben einem Anhängerbremsventil mit Notbremsfunktion auch das Parkventil mit einer zusätzlichen "Notbremsfunktion" auszustatten, welche zur Folge hat, dass das Parkventil mit Einbruch des Druckes in der Vorratsleitung - sei es in einem Notfall oder in einer echten Parksituation - automatisiert in eine Park- oder Entlüftungsstellung verbracht wird.

EP 0 792 783 B1 ist darüber hinaus zu entnehmen, dass in einer Notbremssituation eine Addition der Kräfte des Betriebsbremszylinders und des Federspeicherbremszylinders bei gleichzeitiger Belüftung des Betriebsbremszylinders und Entlüftung des Federspeicherbremszylinders infolge der Entlüftung über das Parkventil in der Entlüftungsstellung dadurch vermieden werden kann, dass ein Wechselventil vorgesehen ist. Der Ausgang dieses Wechselventils ist (hier über ein Schnelllöseventil) mit dem Federspeicherbremszylinder verbunden, während ein erster Eingang des Wechselventils mit dem Parkventil und ein zweiter Eingang des Wechselventils mit dem Betriebsbremszylinder bzw. einem Relaisventil, welches der Erzeugung eines Bremsdruckes für den Betriebsbremszylinder dient, verbunden ist. Durch den Einsatz des Wechselventils wird in einer Notbremssituation, in welcher das Parkventil automatisch in die Entlüftungsstellung gebracht wird, infolge des höheren an dem Betriebsbremszylinder anliegenden Druckes der Federspeicherbremszylinder nicht entlüftet, sondern mit dem Betriebsbremsdruck beaufschlagt, so dass die Entlüftung des Federspeicherbremszylinders (zumindest teilweise) verhindert ist.

Weiterer Stand der Technik ist aus DE 201 22 779 U1 und DE 43 27 759 A1 bekannt.

### AUFGABE DER ERFINDUNG

Der vorliegenden Erfindung liegt die Aufgabe zugrunde, eine Bremsanlage vorzuschlagen, die
- einerseits bei einer großen Betriebssicherheit einen geregelten Bremsvorgang auch in einer Notbremssituation ermöglicht und
- andererseits eine automatische Überführung eines Parkventils in eine Entlüftungsstellung ermöglicht.

### LÖSUNG

Die Aufgabe der Erfindung wird erfindungsgemäß entsprechend einem ersten Lösungsvorschlag mit den Merkmalen des unabhängigen Patentanspruchs 1 gelöst. Weitere Ausgestaltungen dieser erfindungsgemäßen Lösung ergeben sich gemäß den abhängigen Patentansprüchen 2 und 3. Eine zweite Lösung der der Erfindung zugrundeliegenden Aufgabe ist durch eine Bremsanlage gemäß Patentanspruch 4 gegeben. Erfindungsgemäße weitere Ausgestaltungen dieser Lösung sind durch die Merkmale der abhängigen Patentansprüche 5 bis 8 definiert. Eine dritte Lösung der der Erfindung zugrundeliegenden Aufgabe ist durch eine Bremsanlage mit den Merkmalen den unabhängigen Patentanspruchs 9 gegeben. Eine weitere Ausgestaltung dieser Lösung ergibt sich entsprechend dem abhängigen Patentanspruch 10.

### BESCHREIBUNG DER ERFINDUNG

Den erfindungsgemäßen Lösungen liegt zunächst die Erkenntnis zugrunde, dass für den Fall, dass sowohl ein Anhängerbremsventil als auch ein Parkventil jeweils mit einer "Notbremseinheit" ausgestattet sind, diese redundante Notbremsfunktion vorteilhaft ist in einer Parksituation, in welcher über die "Notbremseinheit" des Parkventils automatisiert bewirkt werden kann, dass das Parkventil in eine Entlüftungsstellung überführt wird. Hierdurch ist die Betriebssicherheit in einer Parksituation unabhängig davon, ob ein Benutzer ordnungsgemäß das Parkventil in seine Entlüftungsstellung bringt oder dieses vergisst.

Andererseits hat die Erfindung erkannt, dass in einer echten Notbremssituation für einen sich bewegenden Anhänger mit Abfall des Drucks in einer Vorratsleitung eine gleichzeitige Aktivierung der Notbremseinheit des Anhängerbremsventils einerseits und des Parkventils andererseits zu Problemen führen kann. Dies ist insbesondere dann der Fall, wenn die Bremsanlage mit einer Regeleinrichtung zur Durchführung eines geregelten Bremsvorganges über Betriebsbremszylinder verfügt. Bei einer derartigen Regeleinrichtung handelt es sich beispielsweise um eine ABS-Einrichtung, eine EBS-Einrichtung und/oder eine ALB-Einrichtung, für die eine Regelung einer Bremskraft entsprechend einem Beladungszustand des Anhängers und/oder der Traktion des Anhängers auf der Fahrbahn erfolgt mit dem Reglungsziel, eine Blockade der Räder vor dem Stillstand des Anhängers zu vermeiden. In einem derartigen Fall kann die Interaktion zwischen der Notbremseinheit des Anhängerbremsventils mit einer Druckbeaufschlagung der Betriebsbremszylinder und der Notbremsfunktion des Parkventils mit einer Entlüftung des Federspeicherbremszylinders zur Folge haben, dass die Regeleinrichtung zur Durchführung eines geregelten Bremsvorganges versagt.

Die unterschiedlichen erfindungsgemäßen Lösungen basieren auf dem gemeinsamen Grundgedanken, dass eine automatische Betätigungseinheit des Parkventils für eine echte Parksituation, also ein Ruhen des Anhängers, wirksam werden soll, wie dieses in einer möglichen Ausführungsform für die in EP 0 792 783 B1 bekannte Lösung der Fall ist, also in Form einer automatisierten Herbeiführung einer Entlüftungsstellung. Hingegen erfolgt eine Verhinderung der automatischen Entlüftung des Federspeicherbremszylinders durch die Betätigungseinheit des Parkventils, wenn sich das Fahrzeug bewegt und ein Abfall des Druckes in der Vorratsleitung auftritt. Hierdurch können Probleme infolge einer Interaktion einer Notbremsfunktion eines Anhängerbremsventils und einer Notbremsfunktion eines Parkventils in einer Notbremssituation vermieden werden, ohne dass auf den Komfort und die erhöhte Sicherheit einer automatisierten Entlüftung des Federspeicherbremszylinder in einer Parksituation mit Abfall des Drucks in der Vorratsleitung verzichtet werden muss.

Die genannte Verhinderung kann gemäß einer ersten erfindungsgemäßen Lösung dadurch erfolgen, dass die Betätigungseinheit des Parkventils zwar die Entlüftungsstellung herbeiführt. Allerdings wird durch die weiteren zwischen die Federspeicherbremszylinder und das Parkventil vor- oder nachgeschalteten Bauelemente vermieden, dass es tatsächlich zur Entlüftung des Federspeicherbremszylinders kommt.

In Ausgestaltung dieses ersten Lösungsgedankens bildet die Regeleinrichtung mit einem Wechselventil eine Baueinheit, wobei in der Baueinheit weitere elektrische, elektropneumatische oder pneumatische Bauelemente integriert sein können. Eine derartige Baueinheit bildet ein kompaktes Zulieferteil, welches vereinfacht in den Anhänger montiert werden kann. Von dem Wechselventil ist ein erster Eingang mit einem Anschluss des Parkventils verbunden, wobei der Anschluss des Parkventils in der Entlüftungsstellung entlüftet ist. Ein zweiter Eingang des Wechselventils ist mit einem mit dem Betriebsbremszylinder verbundenen Anschluss der Regeleinrichtung verbunden. Schließlich ist ein Ausgang des Wechselventils mit dem Federspeicherbremszylinder verbunden. Hierbei und im Folgenden kann das Merkmal "verbunden" (ebenso: "entlüftet"; "belüftet"; "zugeführt"; ...) eine beliebige unmittelbare oder mittelbare Verbindung (Entlüftung; Belüftung; Zuführung; ...) unter Zwischenschaltung weiterer beliebiger pneumatischer Bauelemente umfassen. Somit kann das Wechselventil mit seiner grundsätzlichen Integration in die Bremsanlage dem Wechselventil, welches in EP 0 792 783 B1 mit dem Bezugszeichen 6 gekennzeichnet ist, entsprechen, wobei allerdings abweichend erfindungsgemäß die Baueinheit gebildet ist.

Infolge des vorgenannten Wechselventils (im Folgenden auch als "erstes Wechselventil" bezeichnet) kann der Federspeicherbremszylinder über das Parkventil entlüftet oder mit einem geregelten Betriebsbremsdruck belüftet werden. Der alleinige Einsatz dieses Wechselventils kann aber dann zu einem Versagen der Regelung der Bremskraft in einer Notbremssituation führen, wenn insbesondere infolge der Traktionsverhältnisse bei Einsatz eines ABS-/EBS-Systems und/oder des Beladungszustandes bei Einsatz einer ALB-Einrichtung der ausgesteuerte Betriebsbremsdruck so klein ist, dass dieser nicht ausreicht, um die Federspeicherbremszylinder in ausreichendem Maß zu lösen. In diesem Fall geht die Regeleinrichtung davon aus, dass eine Bremsung entsprechend dem ausgeregelten Betriebsbremsdruck ausschließlich durch den Betriebsbremszylinder verursacht wird, während tatsächlich zusätzlich zumindest eine Teilbremskraft des Federspeicherbremszylinders wirkt. Ein derartiger systematischer Regelungsfehler kann dazu führen, dass schlimmstenfalls die Regelung der Bremskraft für die Notbremsung versagt.

Um dieses zu vermeiden, ist erfindungsgemäß ein weiteres Wechselventil vorgesehen. Dieses weitere Wechselventil ist zwischen das erste Wechselventil und das Parkventil derart zwischengeschaltet, dass ein erster Eingang in der Entlüftungsstellung des Parkventils entlüftet ist, während ein zweiter Eingang mit einer Steuerleitung der Regeleinrichtung verbunden ist. Der Ausgang dieses weiteren Wechselventils ist mit dem ersten Eingang des ersten Wechselventils, welches mit der Regeleinrichtung eine Baueinheit bildet, verbunden. Die genannte Anordnung der beiden Wechselventile hat letztendlich in einer Notbremssituation zur Folge, dass in dem Fall eines Regelungseingriffs der Regeleinrichtung für die Bremskraft, beispielsweise infolge mangelnder Traktion oder Beladung, eine Belüftung des Federspeicherbremszylinders nicht mit einem reduzierten, ausgeregelten Druck erfolgt, sondern vielmehr mit dem ungeregelten Druck der Steuerleitung der Regeleinrichtung. Dies bewirkt, dass die Belüftung des Federspeicherbremszylinders unabhängig von dem Auftreten und dem Ausmaß eines Regelungseingriffes der Regeleinrichtung ist, wodurch die zuvor erläuterten fehlerhaften Regelungsvorgänge vermieden sind.

Von Vorteil kann die erfindungsgemäße Ausgestaltung auch dann sein, wenn die mit der Regeleinrichtung und dem erstgenannten Wechselventil gebildete Baueinheit zur Verringerung der Bauteilvielfalt für unterschiedliche Anhänger Einsatz finden soll
- sowohl in Verbindung mit einem Parkventil, welches über die automatische Betätigungseinheit verfügt, über die automatisiert eine Park- oder Entlüftungsstellung herbeigeführt wird,
- als auch in Verbindung mit einem Parkventil, welches über keine automatische Betätigungseinheit verfügt.

In einem derartigen Fall kann für das Parkventil mit Betätigungseinheit zusätzlich zu dem ersten Wechselventil in der ersten Baueinheit das weitere Wechselventil in der erfindungsgemäßen Weise in der Bremsanlage angeordnet werden, während für einen Betrieb der Baueinheit für ein Parkventil ohne automatische Betätigungseinheit das weitere Wechselventil nicht zwischen die Baueinheit und das Parkventil zwischengeschaltet wird.

In weiterer Ausgestaltung einer derartigen Bremsanlage initiiert die Regeleinrichtung mit der Detektion eines Abrisses der Vorratsleitung oder eines Abfalls des Druckes in der Vorratsleitung automatisiert einen geregelten Bremsvorgang über die Betriebsbremszylinder. Hierbei kann die Detektion eines Abrisses der Vorratsleitung beispielsweise über einen mechanischen oder elektrischen Sensor erfolgen, welcher die Anbindung der Vorratsleitung oder des zugeordneten Kupplungskopfes kontrolliert. Alternativ oder zusätzlich kann ein Drucksensor vorhanden sein, welcher den Druck in der Vorratsleitung oder einen hiermit korrelierenden Druck überprüft. Beispielsweise kann der geregelte Bremsvorgang mit Unterschreiten eines Schwellwertes des sensierten Druckes oder für einen kritischen Druckgradienten über der Zeit eingeleitet werden.

In weiterer Ausgestaltung einer erfindungsgemäßen Bremsanlage ist das weitere Wechselventil in das Parkventil integriert. Somit bildet sowohl das Parkventil mit dem weiteren Wechselventil als auch die Regeleinrichtung mit dem ersten Wechselventil jeweils eine Baueinheit, die ohne zusätzliche Montageschritte für die Wechselventile verbaut werden können.

Für besondere Ausgestaltungen kann sogar eine Gestaltung der Anschlussverbindungen des Parkventils an die mit Regeleinrichtung und Wechselventil gebildete Baueinheit unabhängig davon erfolgen, ob das Parkventil
- für eine erste Gruppe von Anhängern mit automatischer Betätigungseinheit und dem integrierten weiterem Wechselventil ausgebildet ist oder
- für eine zweite Gruppe von Anhängern ohne automatische Betätigungseinheit und ohne weiteres Wechselventil ausgebildet ist,
wodurch eine Montage vereinfacht ist und ein von dem Automatisierungsgrad der Betätigung des Parkventils unabhängiges pneumatisches Schaltungs- und Leitungsbild erzeugt werden kann.

Für die zweite, alternative Lösung der der Erfindung zugrundeliegenden Aufgabe erfolgte einer Verhinderung der automatischen Entlüftung des Federspeicherbremszylinders durch die Betätigungseinheit des Parkventils dadurch, dass ein elektrisch schaltbares Ventil die Entlüftung verhindert, wobei eine elektrisches Steuersignal des elektrisch schaltbaren Ventils unmittelbar oder mittelbar von einem erkannten Fahrzustand abhängig ist. Beispielsweise kann das elektrisch schaltbare Ventil dann eine Sperrstellung einnehmen, wenn eine Notbremssituation erkannt wird, also eine Bewegung des Anhängers detektiert wird mit einem Abfall des Druckes in der Vorratsleitung. Insbesondere ist das elektrisch schaltbare Ventil als elektrisch betätigbares Sperrventil ausgebildet.

In einer ersten Variante dieser Lösung ist das elektrisch schaltbare Ventil in einer Leitung für eine Zufuhr des Druckes in der Vorratsleitung zu dem Kolben der automatischen Betätigungseinheit angeordnet. Diese Ausgestaltung hat zur Folge, dass mit Eintritt einer Notbremssituation vermieden wird, dass eine automatische Betätigung der Betätigungseinheit erfolgt bzw. künstlich an dem Kolben ein Druck aufrechterhalten wird, obwohl der Druck in der Vorratsleitung bereits abgefallen ist. Eine derartige Lösung kann auch als eine "pneumatische Verriegelung" des Kolbens bezeichnet werden.

Gemäß einer weiteren Variante dieser erfindungsgemäßen Lösung wird zwar in einer Notbremssituation eine Betätigung der Betätigungseinheit mit einer Bewegung des Kolbens und einer Herbeiführung der Entlüftungsstellung hingenommen. Allerdings wird eine tatsächliche Entlüftung durch das elektrisch schaltbare Ventil vermieden, welches in diesem Fall in einer Leitung zwischen dem Parkventil und dem Wechselventil angeordnet ist. Somit hält das Ventil einen Druck aufrecht, obwohl die Betätigungseinheit die Steuereinheit in die Entlüftungsstellung bringt.

In alternativer Ausgestaltung dieser Variante kann das elektrisch schaltbare Ventil auch in einer Leitung zwischen einer mit der Regeleinrichtung und einem Wechselventil gebildeten Baueinheit und dem Federspeicherbremszylinder angeordnet sein. Hierbei kann das elektrisch schaltbare Ventil beliebig ausgebildet sein, bspw. in den genannten Leitungen mit weiteren pneumatischen, elektrischen oder elektropneumatischen Bauelementen angeordnet sein und/oder in das Parkventil oder in die mit der Regeleinrichtung gebildete Baueinheit integriert sein.

Für eine dritte Lösung der der Erfindung zugrundeliegenden Aufgabe erfolgt die Verhinderung der automatischen Entlüftung des Federspeicherbremszylinders durch die Betätigungseinheit des Parkventils durch eine "mechanische" Verriegelungseinrichtung, die den Kolben der Betätigungseinheit derart verriegelt, dass der Kolben und damit die Steuereinheit trotz Abfalls des Druckes in der Vorratsleitung für sich bewegenden Anhänger nicht in die Entlüftungsstellung bewegt werden kann.

Hierbei kann die Verriegelungseinrichtung beliebig ausgestaltet und angesteuert werden, solange diese eine echte Notbremssituation erkennen und/oder verarbeiten kann. In einer vorteilhaften Weiterbildung der Erfindung erfolgt die Verriegelung und/oder Entriegelung der Verriegelungseinrichtung über die Regeleinrichtung, in welcher ohnehin ein Signal über das Auftreten einer Notbremssituation vorliegt. Die Regeleinrichtung wirkt hierbei insbesondere elektrisch auf die Verriegelungseinrichtung ein. Ebenfalls denkbar ist eine elektrische Ansteuerung eines elektropneumatischen Ventils, welches einen Druck freischalten kann, welcher die Verriegelungseinrichtung betätigen kann.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

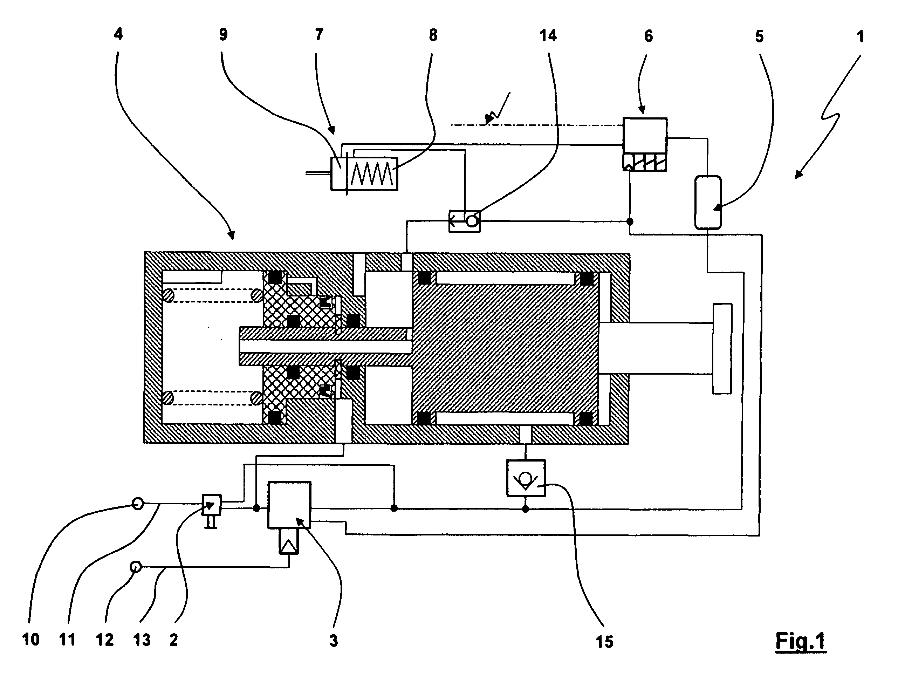

Im Folgenden wird die Erfindung anhand in den Figuren dargestellter bevorzugter Ausführungsbeispiele weiter erläutert und beschrieben. Hierbei zeigen Fig. 1 bis 12 unterschiedliche Ausführungsformen von Bremsanlagen für einen Anhänger in schematisierter Darstellung.

### FIGURENBESCHREIBUNG

**Fig. 1** zeigt eine Bremsanlage 1 eines Anhängers, die in an sich bekannter Weise mit einem Löseventil 2, einem Anhängerbremsventil 3 oder einem Relaisventil, einem manuell betätigbaren Parkventil 4, einem Vorratsbehälter 5, einer Regeleinrichtung 6, insbesondere eine ABS-Einheit, eine EBS-Einheit und/oder eine ALB-Einheit, und einem Kombi-Bremszylinder 7 mit einem Federspeicherbremszylinder 8 und einem Betriebsbremszylinder 9 ausgestaltet ist. Der Bremsanlage 1 wird über einen Kupplungskopf Vorrat 10 Vorratsdruck eines Zugfahrzeuges zu einer Vorratsleitung 11 zugeführt, die über das Löseventil 2, welches manuell betätigbar ist, mit dem Vorratsbehälter 5 verbunden ist. Über eine Kupplungskopf Bremse 12 erfolgt eine Übergabe eines Bremssteuerdruckes von dem Zugfahrzeug zu einer Bremssteuerleitung 13, die mit einem Steueranschluss des Anhängerbremsventils 3 verbunden ist. Unter Einsatz eines Wechselventils 14 sowie eines Rückschlagventils 15 sind die genannten pneumatischen Bauelemente wie in Fig. 1 dargestellt in an sich bekannter Weise pneumatisch miteinander verbunden, wobei das hier dargestellte Parkventil 4 nicht dem Stand der Technik entspricht, was im Folgenden noch näher erläutert wird.

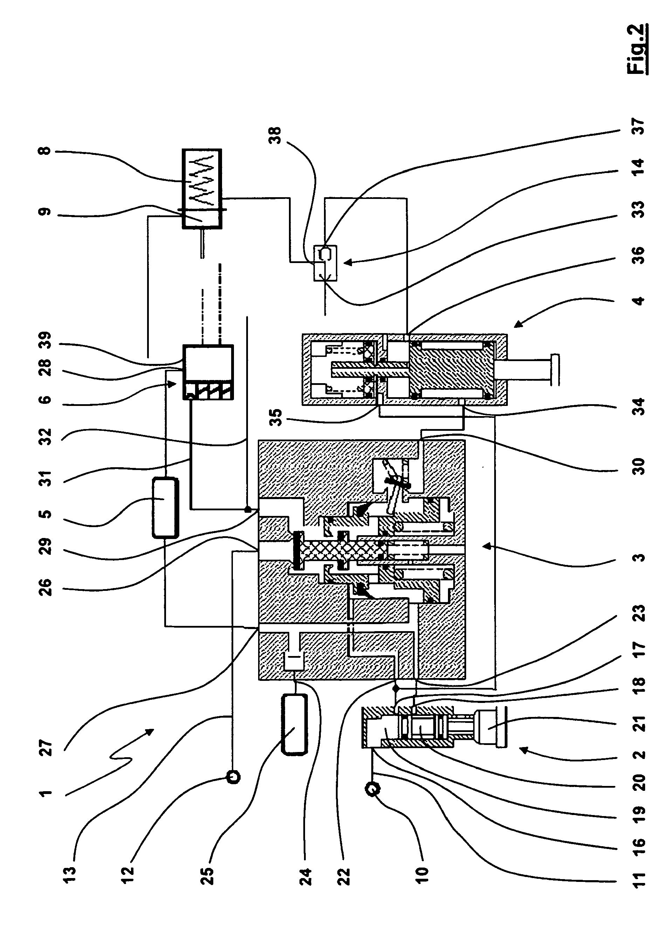

**Fig. 2** zeigt schematisch eine Bremsanlage 1 in erhöhtem Detaillierungsgrad. Das Löseventil 2 besitzt einen Anschluss 16, der mit der Vorratsleitung 11 verbunden ist, sowie zwei Anschlüsse 17, 18. Das Löseventil 2 besitzt zwei Stellungen. In der in Fig. 2 dargestellten ersten Stellung ist der Anschluss 16 mit dem Anschluss 17 verbunden, während der Anschluss 18 gesperrt ist. In einer zweiten Stellung ist die Verbindung zwischen Anschluss 16 und den Anschlüssen 17, 18 gesperrt, während die Anschlüsse 17, 18 miteinander verbunden sind. Hierzu besitzt das Löseventil 2 einen mit dem Druck der Vorratsleitung 11 beaufschlagten Druckraum 19. Der Druckraum 19 ist begrenzt durch eine Stirnseite eines Steuerschiebers 20. Der Steuerschieber besitzt zwei Steuerkanten mit einem dazwischen angeordneten Ringraum. In der ersten Stellung des Löseventils 2 sperrt die dem Druckraum 19 zugewandte Steuerkante die Verbindung zwischen den Anschlüssen 17, 18, während diese Steuerkante in der zweiten Stellung die Verbindung zwischen Anschluss 16 und den Anschlüssen 17, 18 sperrt, während der Ringraum eine Verbindung zwischen den Anschlüssen 17, 18 schafft. Für eine Druckbeaufschlagung der Vorratsleitung 11 befindet sich das Löseventil 2 infolge der auf die Stirnfläche des Steuerschiebers 20 einwirkenden Drucks der Vorratsleitung in der in Fig. 2 dargestellten ersten Stellung, während ohne Druck in der Vorratsleitung 11 die erste und zweite Stellung des Löseventils 2 stabil sind und die Stellung des Löseventils 2 manuell durch Einwirken auf ein Betätigungsorgan 21 veränderbar ist. Eine Verschiebung des Steuerschiebers 20 infolge des Drucks in der Vorratsleitung 11 ist durch einen Anschlag in der ersten Stellung begrenzt.

Das Anhängerbremsventil 3 besitzt einen Anschluss 22, welcher mit dem Anschluss 17 verbunden ist, sowie einen Anschluss 23, der mit dem Anschluss 18 verbunden ist. Weiterhin besitzt das Anhängerbremsventil 3 einen Anschluss 24, der mit einem dem Kupplungskopf zugeordneten Behälter 25 für einen Nebenverbraucher verbunden ist. Ein Anschluss 26 des Anhängerbremsventils 3 ist mit der Bremssteuerleitung 13 verbunden. Ein weiterer Anschluss 27 ist über den Vorratsbehälter 5 mit einem Anschluss 28 der Regeleinrichtung 6 verbunden. Weiterhin besitzt das Anhängerbremsventil 3 einen Anschluss 29 sowie einen Anschluss 30. Der Anschluss 29 ist mit einer Steuerleitung 31 für die Regeleinrichtung 6 verbunden, von der eine Leitung 32 abzweigt, die mit einem zweiten Eingang 33 des Wechselventils 14 verbunden ist. Der Anschluss 30 ist mit einem Anschluss 34 des Parkventils 4 verbunden. Der Anschluss 17 des Löseventils 2 ist mit einem weiteren Anschluss 35 des Parkventils 4 verbunden. Ein Anschluss 36 ist mit einem ersten Eingang 37 des Wechselventils 14 verbunden. Ein Ausgang 38 des Wechselventils 14 ist mit dem Federspeicherbremszylinder 8 verbunden. Die Regeleinrichtung 6 besitzt einen Anschluss 39, der mit dem Betriebsbremszylinder 9 verbunden ist und welchen die Regeleinrichtung 6 mit einem ausgeregelten Druck des Vorratsbehälters 5 beaufschlagt, der von dem Druck in der Steuerleitung 31 und von einer ABS-, EBS- und/oder ALB-Funktion abhängig ist.

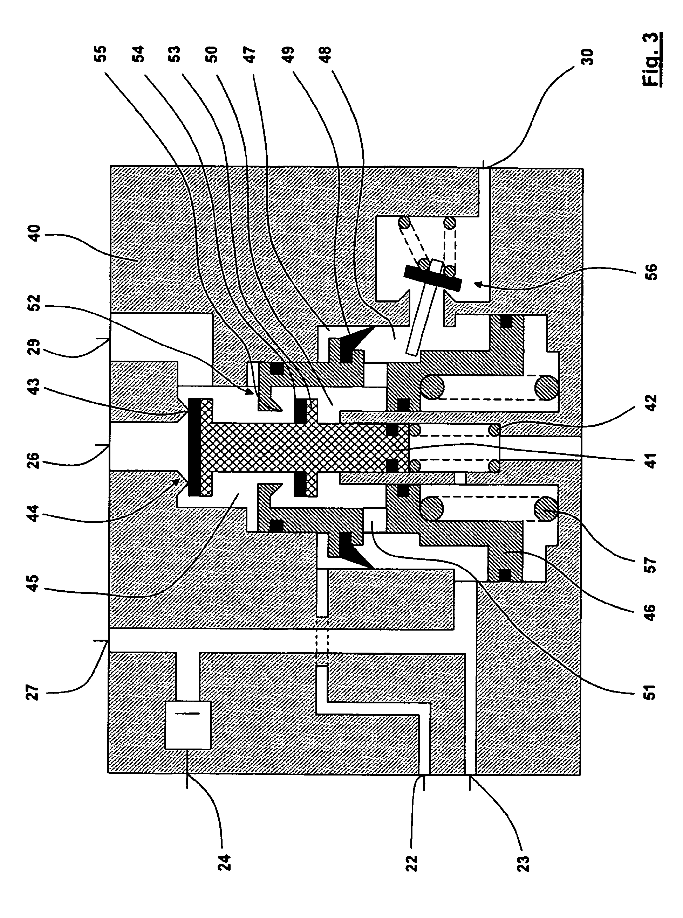

In **Fig. 3** ist ein Anhängerbremsventil 3 in größerem Detail dargestellt. In einem Gehäuse 40 ist ein Steuerelement 41 verschieblich geführt und über eine Feder 42 in der in Fig. 3 dargestellten Stellung gegen einen Ventilsitz 43 des Gehäuses 40 unter Abdichtung gepresst. Hiermit ist ein Ventil 44 geschaffen, welches in der dargestellten Schließstellung die Anschlüsse 26, 29 voneinander trennt, während in einer Öffnungsstellung, in welcher die Feder 42 in höherem Maße beaufschlagt ist, über das Ventil 44 eine Verbindung zwischen den Anschlüssen 26, 29 geschaffen ist. In einer Ausnehmung 45 des Gehäuses 40, in welcher auch das Steuerelement 41 angeordnet ist, ist in einer abgestuften Bohrung ein abgestufter Kolben 46 angeordnet. Zwischen einer Mantelfläche des Kolbens 46 und einer Bohrung des Gehäuses sind Ringkammern 47, 48 gebildet, die über ein Rückschlagventil 49 voneinander getrennt sind. Das Rückschlagventil 49 ermöglicht ein Überströmen von der Ringkammer 47 zu der Ringkammer 48, während eine umgekehrte Strömung durch das Rückschlagventil unterbunden ist. Für das dargestellte Ausführungsbeispiel ist das Rückschlagventil 49 mit einer Rückschlaglippe ausgebildet. Die Ringkammer 47 ist mit dem Anschluss 22 verbunden, so dass auf die Ringkammer 47 für vorhandenen Druck in der Vorratsleitung 11 dieser Druck wirkt. Die Ringkammer 48 ist mit den Anschlüssen 23, 27 verbunden. Für vorhandenen Druck in der Vorratsleitung 11 strömt Druckluft aus der Vorratsleitung 11 über den Anschluss 22, die Ringkammer 47, das Rückschlagventil 49, die Ringkammer 48 und den Anschluss 27 zu dem Behälter 5, so dass ein Befüllung des Vorratsbehälters 5 über das Anhängerbremsventil 3 ermöglicht ist. Befindet sich hingegen das Löseventil 2 in seiner zweiten Stellung, also nicht in der in Fig. 2 dargestellten Stellung, sind die Ringkammern 47, 48 über das Löseventil miteinander verbunden.

Innenliegend von dem Kolben 46 ist eine innere Kammer 50 gebildet, die über eine Bohrung 51 mit der Ringkammer 48 ständig verbunden ist. Weiterhin bilden das Steuerelement 41 und der Kolben 46 ein Ventil 52, welches in geöffnetem Zustand eine Verbindung zwischen der Kammer 50 über die Ausnehmung 45 zu dem Anschluss 29 schafft. Zur Bildung des Ventils 52 besitzt das Steuerelement 41 einen umlaufenden Bund 53, der einen Ventilsitz 54 bildet. Der Kolben 46 bildet in seinem Endbereich einen Ventilkörper 55, der in geschlossenem Zustand des Ventils 52 unter Abdichtung zur Anlage an den Ventilsitz 54 kommt. Während das Ventil 44 mit Bewegung des Steuerelementes 41 nach unten geöffnet wird, führt eine Relativbewegung des Steuerelementes 41 gegenüber dem Kolben 46 nach unten zu einer Öffnung des Ventils 52. Der Ringraum 48 ist über ein Rückschlagventil 56 mit dem Anschluss 30 verbunden. In seiner Funktion als Rückschlagventil öffnet dieses für ein Überströmen von der Ringkammer 48 zu dem Anschluss 30. Alternativ oder zusätzlich kann das Rückschlagventil 56 u. U. auch für eine umgekehrte Strömung oder unterhalb eines etwaigen Öffnungsdrucks des Rückschlagventils bewegungsgesteuert geöffnet werden. Mit einer Verschiebung des Kolbens 46 nach oben kommt ein Vorsprung der Mantelfläche des Kolbens zur Anlage an einen Fortsatz des Rückschlagventils 56 und verkippt mit weiterer Verschiebung des Kolbens 46 das Rückschlagventil 56, so dass dieses eine Öffnungsstellung einnehmen kann. Der Kolben 46 ist über eine Feder 57 abgestützt, welche den Kolben 46 in Richtung einer Öffnungsstellung des Ventils 52 beaufschlagt.

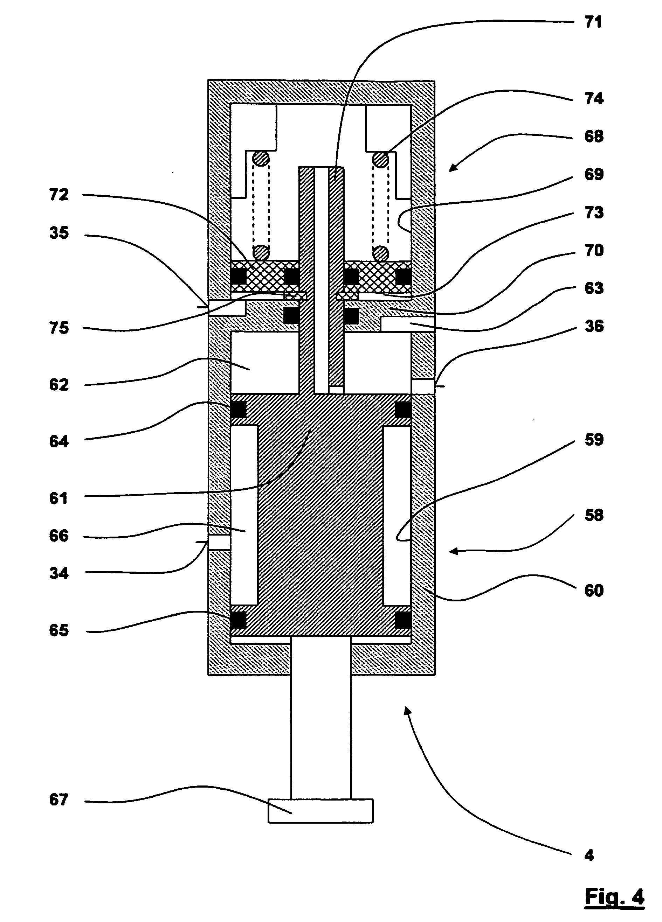

Das Parkventil 4 ist in größerem Detail in **Fig. 4** dargestellt. Das Parkventil 4 verfügt über eine Steuereinheit 58. Die Steuereinheit ist mit einer Bohrung 59 eines Gehäuses 60 gebildet, in welche die Anschlüsse 34, 36 axial voneinander beabstandet einmünden. In der Bohrung 59 ist axial verschieblich ein Ventilelement 61 geführt, welches zwischen einer Stirnseite und dem Gehäuse 60 eine Entlüftungskammer 62 bildet, die in ständiger Verbindung mit einer Entlüftung 63 steht. Das Ventilelement 61 besitzt axial voneinander beabstandete, gegenüber der Bohrung 59 abgedichtete Steuerkanten 64, 65, zwischen denen zwischen Ventilelement 61 und Gehäuse 60 eine hohlzylinderförmige Ringkammer 66 ausgebildet ist. In einer oberen ersten Stellung der Steuereinheit sind über die Ringkammer 66 die Anschlüsse 34, 36 miteinander verbunden, während mit einer Bewegung des Ventilelementes 61 nach unten in die in Fig. 4 dargestellte Stellung die Steuerkante 64 dem Anschluss 36 überfährt, so dass in der skizzierten zweiten Stellung, die hier auch als "Entlüftungsstellung" bezeichnet ist, die Anschlüsse 34, 36 über die Steuerkante 64 voneinander getrennt sind. In dieser Stellung mündet der Anschluss 36 in die Entlüftungskammer 62, so dass eine Entlüftung von Anschluss 36 ermöglicht ist. Das Ventilelement 61 ist starr mit einem Betätigungsorgan 67 gekoppelt, über welches manuell eine Betätigung des Parkventils 4 ermöglicht ist.

Darüber hinaus besitzt das Parkventil eine automatische Betätigungseinheit 68. Die Betätigungseinheit 68 weist eine Bohrung 69 auf, wobei die Bohrungen 59, 69 fluchtend zueinander hintereinander liegend angeordnet sind und durch eine Trennwand 70 voneinander getrennt sind. Das Ventilelement 61 besitzt einen starr mit diesem gekoppelten stabförmigen oder wellenartigen Fortsatz 71, welcher sich unter Abdichtung durch die Trennwand 70 in die Ausnehmung oder Bohrung 69 erstreckt. In der Bohrung 69 ist verschieblich ein Kolben 72 mit kreisringförmiger Kolbenfläche geführt, wobei der Kolben 72 radial innen liegend gegenüber dem Fortsatz 71 sowie radial außen liegend gegenüber der Bohrung 69 jeweils abgedichtet und verschieblich gelagert ist. Von der Kolbenfläche des Kolbens 72, der Bohrung 69, der Mantelfläche des Fortsatzes 71 und der Stirnwand 70 begrenzt ist eine Betätigungskammer 73, die mit dem Anschluss 35 verbunden ist und der der Druck der Vorratsleitung 11 zugeführt ist. Der Kolben 72 ist auf der der Betätigungskammer 73 gegenüberliegenden Seite gegenüber dem Gehäuse über eine Druckkräfte aufnehmende Feder 74 abgestützt, welche den Kolben 72 für drucklose Betätigungskammer 73 in die in Fig. 4 skizzierte Stellung bringen kann. Für die Beaufschlagung der Betätigungskammer 73 mit dem Druck der Vorratsleitung 11 wird der Kolben 72 aus der in Fig. 4 dargestellten Stellung unter Beaufschlagung der Betätigungsfeder 74 nach oben bewegt. Infolge des Freiheitsgrades des Kolbens 72 gegenüber dem Fortsatz 71 ist durch diese Bewegung die Stellung des Ventilelementes 61 nicht zwingend verändert. Allerdings kann das Ventilelement 61 auf eine manuelle Betätigung des Betätigungsorgans 67 dieser Bewegung folgen. Der Fortsatz 71 besitzt einen Absatz, der für das in Fig. 4 dargestellte Ausführungsbeispiel mit einem Sicherungsring 75 gebildet ist. Für nach oben bewegten Kolben 72 und betätigtes Betätigungsorgan 67, also für das Ventilelement 61 in der ersten Stellung, liegt der Sicherungsring 75 an dem Kolben 72 an. Ein Abfall des Druckes in der Vorratsleitung 11 hat zur Folge, dass die Betätigungsfeder 74 den Kolben unter Verringerung des Volumens der Betätigungskammer 73 nach unten bewegt. Für diese Bewegung nimmt der Kolben 72 infolge der Anlage desselben an dem Sicherungsring 75 den Fortsatz und das Ventilelement 61 mit, so dass mit dem Abfall des Drucks in der Vorratsleitung 11 automatisiert das Parkventil 4 von der ersten Stellung in die in Fig. 4 dargestellte zweite Stellung verbracht wird.

Für das in Fig. 1 dargestellte abgewandelte Ausführungsbeispiel des Parkventils 4 ist der Kolben 72 als gestufter Kolben ausgebildet, so dass je nach Stellung des Kolbens 72 unterschiedlich große Kolbenflächen zum Einsatz kommen, wodurch die Bewegungscharakteristik des Kolbens 72 in Abhängigkeit des Druckes und der Befüllung der Betätigungskammer 73 beeinflusst werden kann.

Die Funktionsweise der Bremsanlage 1 gemäß Fig. 2-4 ist wie folgt:
Wird der Anhänger mit dem Zugfahrzeug über den Kupplungskopf Vorrat 10 gekoppelt, wirkt der Druck der Vorratsleitung 11 auf die Stirnfläche des Steuerschiebers 20 und bringt diesen in die in Fig. 2 dargestellte erste Stellung. Es erfolgt eine Befüllung des Vorratsbehälters 5 über den Kupplungskopfvorrat 10, Vorratsleitung11, Druckraum 19, Anschluss 17, Anschluss 22, Ringkammer 47, Rückschlagventil 49, Ringkammer 48, Anschluss 27. Infolge eines Einwirkens des steigenden Drucks auf die der Feder 57 gegenüberliegende Kolbenfläche des Kolbens 46 wird mit einer zunehmenden Befüllung des Vorratsbehälters 5 der Kolben 46 unter Beaufschlagung der Feder 57 nach unten gedrückt. Dies hat ein Schließen des Ventils 52 zur Folge. Weiterhin nimmt der Kolben 46 mit zunehmender Bewegung des Kolbens 46 für geschlossenes Ventil 52 auch das Steuerelement 41 mit nach unten, was ein Öffnen des Ventils 44 zur Folge hat. Während sich das Parkventil für den Beginn des Kupplungsvorganges in der zweiten Stellung gemäß Figuren 2 und 4 befindet, führt das Ansteigen des Druckes an dem Anschluss 17 - und damit an dem Anschluss 35 - zu einer Druckbeaufschlagung der Betätigungskammer 73, die den Kolben 72 nach oben schiebt, ohne dass sich die Stellung des Ventilelementes 61 verändert. Die Ringkammer 66 ist hierbei mit dem Druck der Vorratsleitung 11 beaufschlagt, wobei hierdurch keine Kraft auf das Ventilelement 61 ausgeübt wird. Ohne manuelle Betätigung des Betätigungsorgans 67 ist somit der Anschluss 36 entlüftet, was (ohne Belüftung des zweiten Eingangs 33 des Wechselventils 14) die Entlüftung des Federspeicherbremszylinders 8 zur Folge hat. Wird hingegen das Parkventil 4 manuell betätigt in die erste Stellung, wird der Federspeicherbremszylinder 8 über das Wechselventil 14, den ersten Eingang 37, Anschluss 36, Ringkammer 66, Anschluss 34, Anschluss 30, Rückschlagventil 56, Ringkammer 48, Rückschlagventil 49, Ringkammer 47, Anschluss 22, Anschluss 17, Druckraum 19 auf dem Niveau des Drucks der Vorratsleitung 11 gehalten, so dass mit Druckbeaufschlagung des Federspeicherbremszylinders die Federspeicherbremse gelöst werden kann. Mit ordnungsgemäßem Druck in der Vorratsleitung 11 befindet sich das Ventil 44 in seiner Öffnungsstellung, so dass der Bremssteuerdruck der Bremssteuerleitung 13 über den Anschluss 26, das Ventil 44 und den Anschluss 29 über die Steuerleitung 31 der Regeleinrichtung 6 zugeführt werden kann, so dass gezielt eine geregelte Bremsung über den Betriebsbremszylinder 9 erfolgen kann.

Erfolgt ein Entkoppeln von dem Zugfahrzeug für aufgeladene Bremsanlage 1, schließt zunächst das Ventil 44, während das Ventil 52 automatisch in seine Öffnungsstellung geht. Bei geeigneter Beaufschlagung eines Ventilelementes 76, welches auch als Überströmventil wirken kann, kann dann in einer Notbremssituation für einen Bremsvorgang der Druck des Behälters 5 genutzt werden, um über die Ringkammer 48, Bohrung 51, Kammer 50, Ventil 52 und Anschluss 29 sowie Steuerleitung 31 einen Bremsvorgang zu bewirken. Für ausreichenden Druck in der Steuerleitung 31 gelangt dieser über das Wechselventil 14 in den Federspeicherbremszylinder 8, so dass der Federspeicherbremszylinder belüftet ist, obwohl das Parkventil 4 infolge des Einbruchs des Druckes in der Vorratsleitung 11 in der in Fig. 2 dargestellten Entlüftungsstellung ist, während eine Bremsung durch die Regeleinrichtung 6 über den Betriebsbremszylinder 9 verursacht wird.

Für ein erneutes Ankoppeln an das Zugfahrzeug kehrt der Kolben 46 wieder in seine untere Stellung zurück. Das Ventil 44 öffnet, was ohne Bremssteuerdruck zur Folge hat, dass die Betriebsbremszylinder 9 entlüftet werden, während das Ventil 52 geschlossen wird. Der Druck in der Vorratsleitung 11 führt dazu, dass der Kolben 72 der Betätigungseinheit 68 in die obere Stellung überführt wird. Dennoch bleibt der Federspeicherbremszylinder 8 weiter über das Parkventil 4 entlüftet, so dass für ein Lösen der Federspeicherbremse die manuelle Betätigung des Parkventils 4 erforderlich ist.

Zusammenfassend ist festzustellen, dass einerseits über die Betätigungseinheit 68 zuverlässig automatisiert dafür Sorge getragen ist, dass sich bei einem Abfall oder Einbruch des Druckes in der Vorratsleitung 11, beispielsweise durch einen Abriss der Vorratsleitung oder eine Leckage, das Parkventil 4 in der in den Figuren 2 und 4 dargestellten Entlüftungsstellung befindet. Während dies in einer echten Parksituation vorteilhaft ist und zu der Entlüftung des Federspeicherbremszylinders 8 führt zwecks Einlegung der Feststell- oder Parkbremse, wird diese Funktion gemäß Fig. 2 in einer echten Notbremssituation dadurch verändert, dass in der Notbremssituation der Druck in der Steuerleitung 31, welcher dem Behälter 25 entstammen kann, über das Wechselventil 14 dem Federspeicherbremszylinder 8 zugeführt wird, wobei dieser Druck ausreichend ist, um die Federspeicherbremse vollständig zu lösen. Somit erfolgt eine ausschließliche Regelung der Bremskraft über den Betriebsbremszylinder 9 durch eine Vorgabe des Druckes über die Regeleinrichtung 6 unter Berücksichtigung
- des Drucks in der Steuerleitung 31,
- der Traktion über ein ABS-/EBS-System und/oder
- eines ALB-Systems.

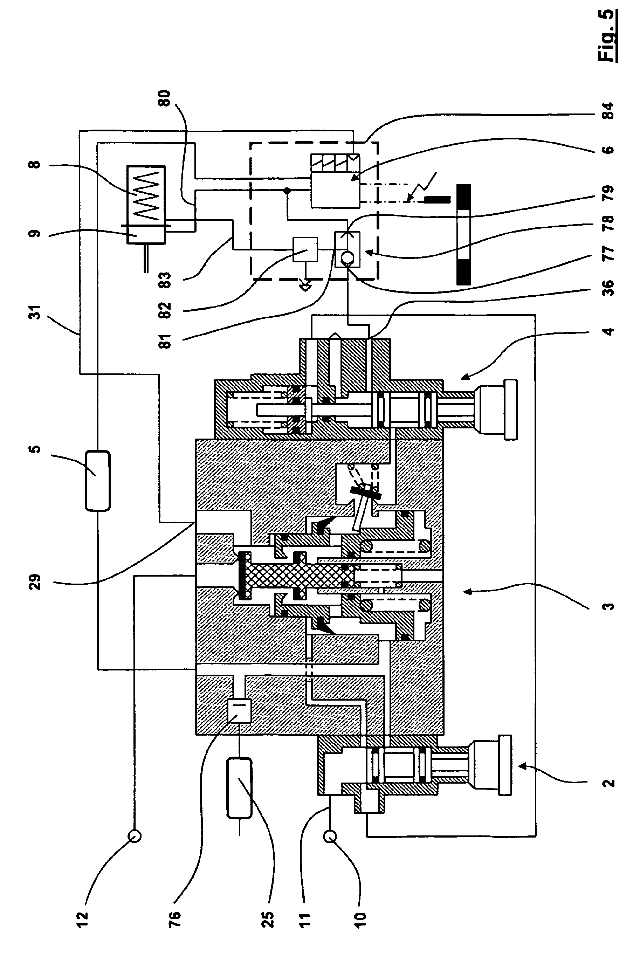

Anders stellt sich bei ansonsten Fig. 2 entsprechender Ausgestaltung die Situation für die Bremsanlage 1 gemäß **Fig. 5** dar. In dieser ist ebenfalls der Anschluss 29 über die Steuerleitung 31 mit einem Steueranschluss der Regeleinrichtung 6 verbunden. Der Anschluss 36 ist mit einem ersten Eingang 77 eines Wechselventils 78 verbunden, dessen zweiter Eingang 79 mit der von der Regeleinrichtung 6 zu dem Betriebsbremszylinder 9 führenden Betriebsbremsleitung 80 verbunden ist. Ein Ausgang 81 des Wechselventils 78 ist, hier über ein Schnelllöseventil 82, mit einer Feststellbremsleitung 83 mit dem Federspeicherbremszylinder 8 verbunden. Der Regeleinrichtung 6 wird das elektrische Signal eines Raddrehzahlsensors und/oder eines Niveausensors zugeführt.

Für das in Fig. 5 dargestellte Ausführungsbeispiel führt eine Notbremssituation dazu, dass das Parkventil 4 in seine Entlüftungsstellung überführt wird. Zur Durchführung eines geregelten Bremsvorganges wird die Regeleinrichtung 6 aus dem Behälter 5 über den Anschluss 29 mit einem Steuerdruck beaufschlagt, wobei die Regeleinrichtung einen je nach Traktion und Beladung ausgesteuerten Druck in der Betriebsbremsleitung 80 erzeugt. Dieser Druck wird über das Wechselventil 78 und das Schnelllöseventil 82 dem Federspeicherbremszylinder 8 zugeführt. Ist dieser Druck bei entsprechender Traktion und/oder Beladung des Anhängers kleiner als der Lösedruck des Federspeicherbremszylinders, tritt eine Federspeicherbremswirkung zu der eigentlich gewünschten Bremswirkung des Betriebsbremszylinders hinzu, wodurch ein Regelfehler der Regeleinrichtung erzeugt wird. Während diese Probleme beseitigt würden durch eine Zuführung des Bremssteuerdruckes in der Steuerleitung 31 zu dem zweiten Eingang 79 des Wechselventils 78 anstelle des ausgeregelten Betriebsbremsdruckes in der Betriebsbremsleitung 80, soll aus Gründen einer Bauteilvereinheitlichung für unterschiedliche Anwendungen unter Umständen dennoch eine Baueinheit 84 eingesetzt werden, die mit der Regeleinrichtung 6 und dem Wechselventil 78 gebildet ist und unter Umständen mit einem zusätzlichen Schnelllöseventil 82 und/oder anderen pneumatischen Bauelementen. Die Baueinheit 84 besitzt einen Anschluss für die Verbindung mit dem Parkventil 4, einen Anschluss für eine Verbindung mit der Feststellbremsleitung 83, einen Anschluss für eine Verbindung mit der Betriebsbremsleitung 80, einen Anschluss für eine Verbindung mit dem Vorratsbehälter 5 sowie einen Anschluss für eine Verbindung mit der Steuerleitung 31. Weitere elektrische Anschlüsse sind zur Anbindung der Regeleinrichtung 6 an weitere Steuereinheiten, zur Zuführung von Messsignalen und zur Ausgabe von Steuersignalen für außerhalb der Baueinheit 84 angeordnete elektrische oder elektropneumatische Bauelemente und/oder an ein Bussystem vorhanden.

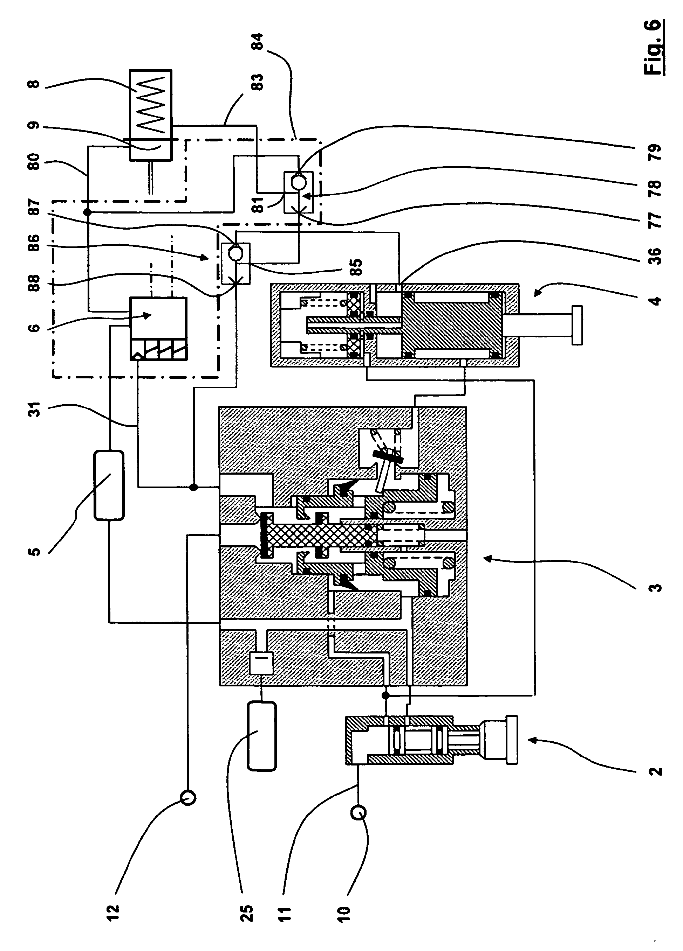

Die weiteren Figuren zeigen Ausführungsbeispiele zur Vermeidung der erläuterten Problematik trotz Einsatzes einer Baueinheit 84, in welcher dem Wechselventil 78 der ausgeregelten Betriebsbremsdruck zugeführt wird:
Für das in **Fig. 6** dargestellte Ausführungsbeispiel ist der erste Eingang 77 des Wechselventils 78 mit dem Ausgang 85 eines weiteren Wechselventils 86 verbunden, welches außerhalb der Baueinheit 84 angeordnet ist. Der erste Eingang 87 des weiteren Wechselventils 86 ist mit dem Anschluss 36 des Parkventils 4 verbunden, während der zweite Eingang 88 des weiteren Wechselventils 86 mit der Steuerleitung 31 verbunden ist. Soll in einer Notbremssituation infolge eines Abrisses der Vorratsleitung oder eines Abfalls des Druckes in der Vorratsleitung 11 ein geregelter Bremsvorgang herbeigeführt werden, leitet das Wechselventil 86 den an dem zweiten Eingang 88 anliegenden Steuerdruck der Steuerleitung 31 über den Ausgang 85 an den ersten Eingang des ersten Wechselventils 78. An dem zweiten Eingang 79 liegt zwar der geregelte Betriebsbremsdruck an. Allerdings gibt das Wechselventil 78 den ungeregelten Vorratsdruck an den Ausgang 81 des ersten Wechselventils 78 und damit zu dem Feststellbremszylinder 8 weiter, so dass dieser vollständig belüftet wird. Somit entspricht die alleinig mit dem Betriebsbremszylinder 9 herbeigeführte Bremskraft dem durch die Regeleinrichtung 6 geregelten Betriebsbremsdruck. Durch zusätzlichen Einsatz des Wechselventils 86 ist somit eine Regelung der Bremskraft ohne einen Regelungsfehler trotz Einsatzes einer entsprechend Fig. 5 ausgebildeten Baueinheit 84 möglich.

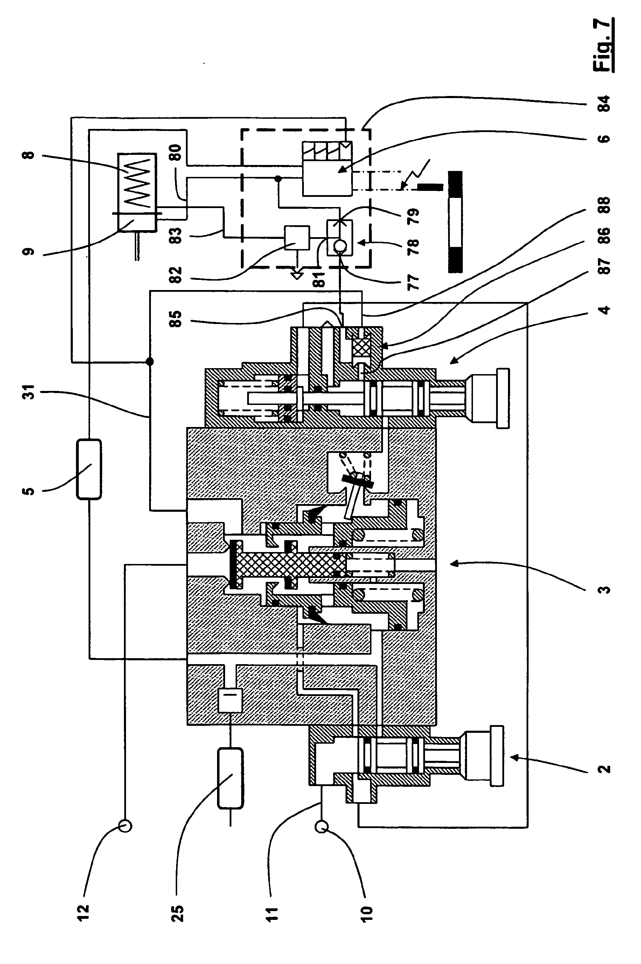

Für das in **Fig. 7** dargestellte Ausführungsbeispiel ist - bei im Wesentlichen Fig. 6 entsprechender Verschaltung - das Wechselventil 86 in das Gehäuse des Parkventils 4 integriert. Dieses erfolgt beispielsweise auf der dem Anhängerbremsventil abgewandten Seite in einer Ausbuchtung des Gehäuses 60, wobei der erste Eingang 87 unmittelbar in die Entlüftungskammer 62 mündet und der zweite Eingang 88 und der Ausgang 85 unmittelbar Anschlüsse des Gehäuses 60 bilden.

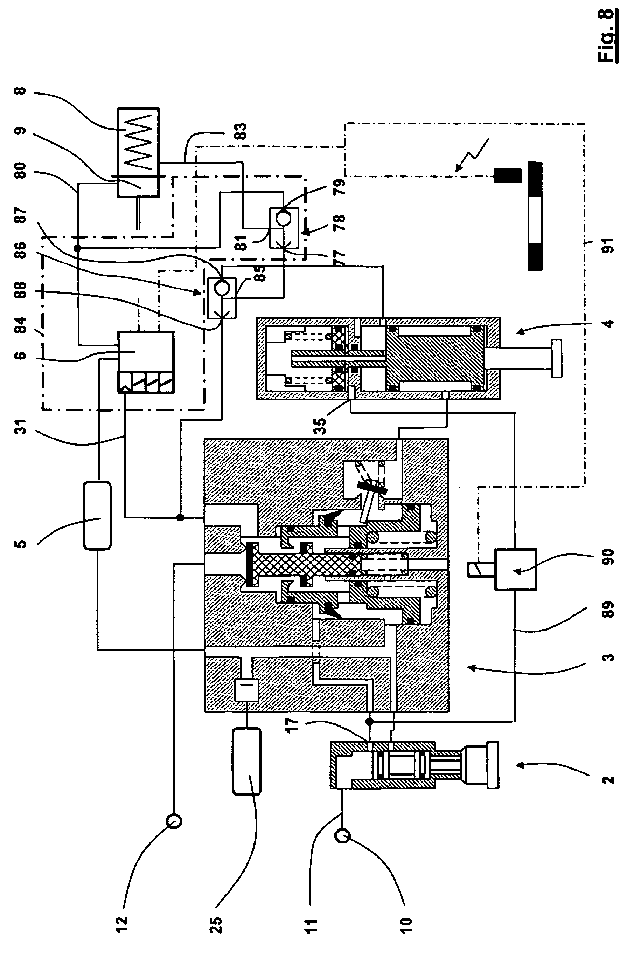

Für das in **Fig. 8** dargestellte Ausführungsbeispiel, welches im Wesentlichem dem in Fig. 6 dargestellten Ausführungsbeispiel entspricht, ist in die Verbindungsleitung 89 zwischen dem Anschluss 17 und dem Anschluss 35 ein elektrisch betätigbares Ventil 90 zwischengeschaltet. Dem Ventil 90 wird ein Steuersignal über eine Steuerleitung 91 zugeführt, welches von der Regeleinrichtung 6 erzeugt werden kann oder einer Raddrehzahlerfassungseinrichtung oder einer Niveauerfassungseinrichtung oder einer anderweitigen Steuereinrichtung. Bei dem Ventil kann es sich beispielsweise um ein 2/2-Wegeventil handeln, welches eine Öffnungsstellung und eine Sperrstellung besitzt. Detektiert die Bremsanlage, insbesondere die Regeleinrichtung 6, dass eine Notbremssituation für sich bewegenden Anhänger auftritt, kann die Steuerleitung 91 automatisiert derart beaufschlagt werden, dass das Ventil 90 in seine Sperrstellung verbracht wird. Dies hat zur Folge, dass trotz des Abfalls des Drucks in der Vorratsleitung 11 der Druck in der Betätigungskammer 73 der Betätigungseinheit 68 aufrechterhalten wird, so dass das Parkventil trotz Abfalls des Drucks in der Vorratsleitung 11 nicht in die Entlüftungsstellung gebracht wird (abweichend zur Schaltstellung in Fig. 8). Ist hingegen eine echte Parksituation gegeben, für welche die Regeleinrichtung 6 oder ein Raddrehzahlsensor erkennt, dass keine Bewegung des Anhängers erfolgt, kann das Ventil 90 in einer Öffnungsstellung verbleiben, so dass in diesem Fall das Parkventil 4 automatisiert in die Entlüftungsstellung verbracht wird, was eine Entlüftung des Federspeicherbremszylinders 8 zur Folge hat.

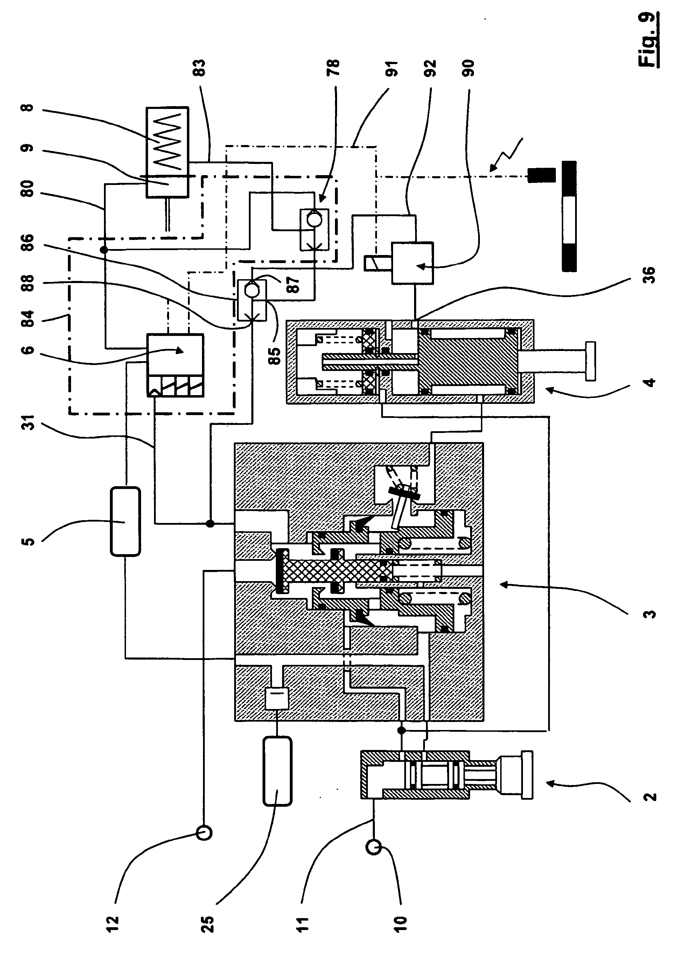

Abweichend hierzu ist in dem in **Fig. 9** dargestellten Ausführungsbeispiel das elektrisch betätigbare Ventil 90 nicht in der Verbindungsleitung 89 angeordnet, sondern vielmehr in der Verbindungsleitung 92 zwischen dem Anschluss 36 des Parkventils 4 und dem ersten Eingang 87 des weiteren Wechselventils 86. Eine Ausbildung des elektrisch betätigbaren Ventils sowie Beaufschlagung mit einem Steuersignal einer Steuerleitung 91 erfolgt entsprechend dem zuvor erläuterten Ausführungsbeispiel, wobei in einer Notbremssituation für das in Fig. 9 dargestellte Ausführungsbeispiel der Abfall des Drucks in der Vorratsleitung 11 zur Folge hat, dass das Parkventil 4 automatisch in die Entlüftungsstellung gelangt. Eine tatsächliche Entlüftung wird in der Notbremssituation allerdings durch die Überführung des Ventils 90 durch ein geeignetes elektrisches Steuersignal in seine Sperrstellung vermieden.

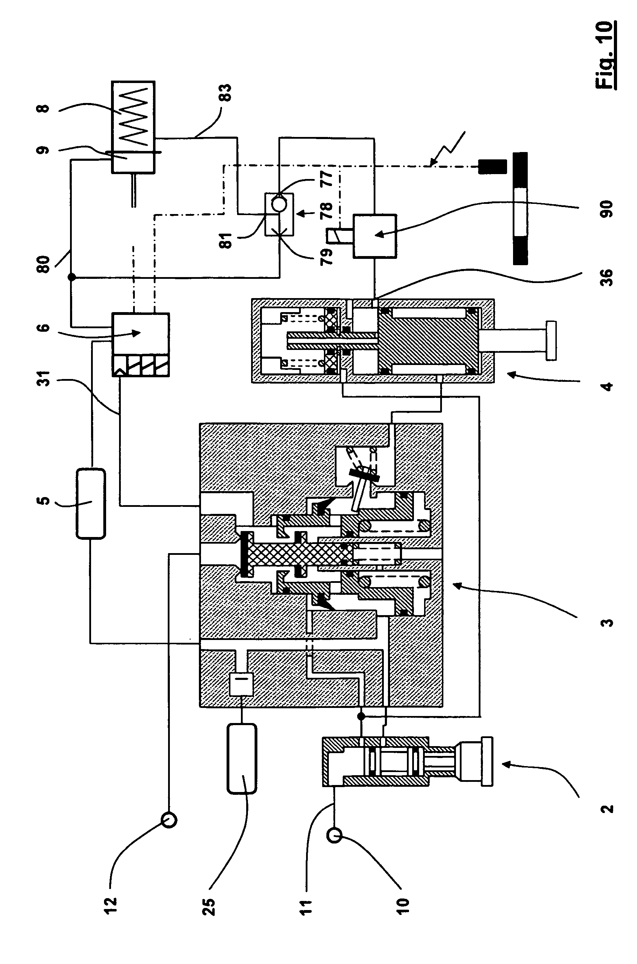

**Fig. 10** zeigt ein abgewandeltes Ausführungsbeispiel, bei dem lediglich ein Wechselventil 78 vorgesehen ist, welchem über den zweiten Eingang 79 der Betriebsbremsdruck zugeführt wird, während der erste Eingang 77 über das elektrisch betätigbare Ventil 90 mit dem Anschluss 36 des Parkventils 4 verbunden ist. Eine Ausbildung und Anbindung des elektrisch betätigbaren Ventils 90 erfolgt entsprechend den zuvor erläuterten Ausführungsformen. Auch wenn das Parkventil 4 in einer Notbremssituation in seine Entlüftungsstellung überführt wird, kann das Ventil 90 einen ausreichenden Belüftungsdruck des Federspeicherbremszylinders aufrecht erhalten.

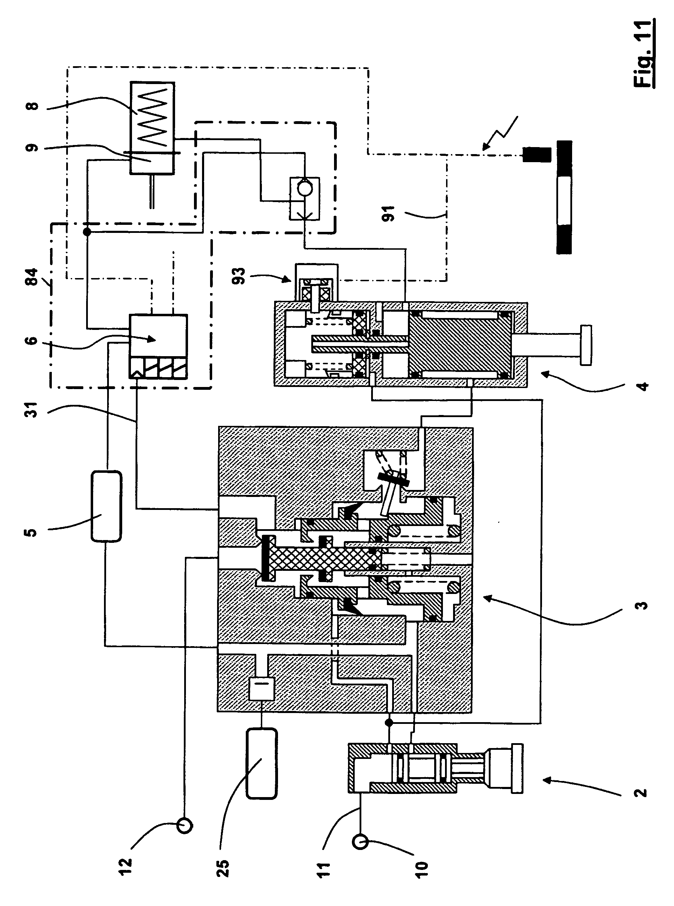

**Fig. 11** zeigt eine Ausführungsform mit einer mechanischen Verriegelung des Kolbens 72 der Betätigungseinheit 68. Hierzu ist eine Verriegelungseinrichtung 93 an dem Parkventil 4 vorgesehen, über die der Kolben 72 in seiner oberen Position, die der Stellung für anliegenden Druck in der Vorratsleitung 11 entspricht, verriegelt werden kann. Die Verriegelungseinrichtung 93 besitzt einen elektromagnetischen Aktuator, über den bei einem geeigneten Steuersignal in der Steuerleitung 91, beispielsweise von der Regeleinrichtung 6, für den Fall, dass der Druck in der Vorratsleitung 11 vorhanden ist und sich der Anhänger bewegt, der Kolben 72 verriegelt wird, während die Verriegelungseinrichtung 93 in einer Parksituation für ruhenden Anhänger den Kolben 72 freigibt.

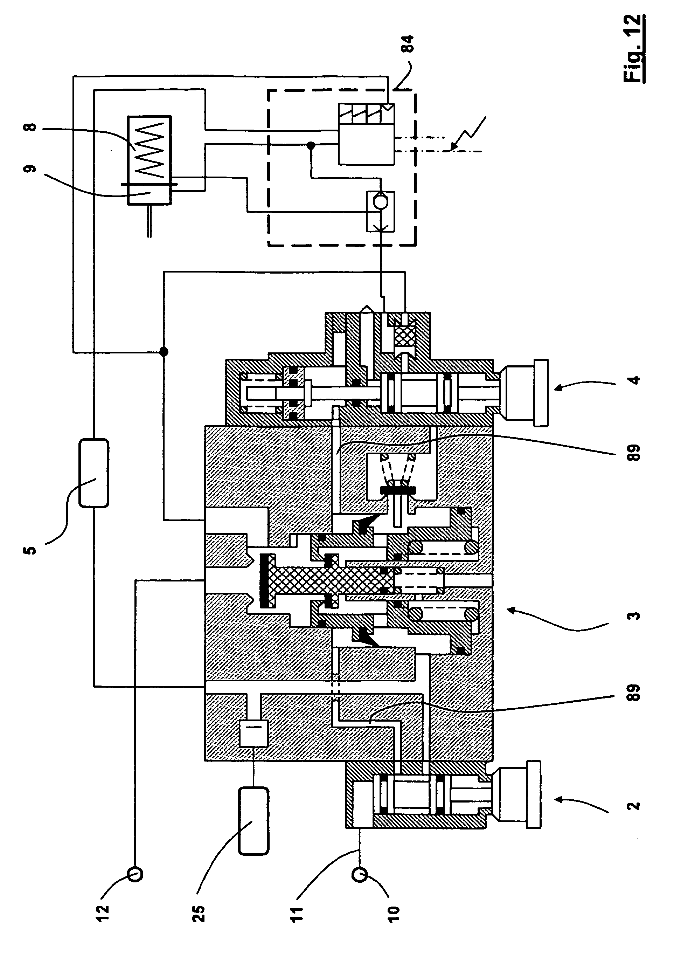

Für eine bauliche Ausgestaltung der dargestellten pneumatischen Verbindungen und Leitungen gibt es vielfältige Möglichkeiten, welche sämtlich dem erfindungsgemäßen Grundgedanken unterfallen sollen. Beispielsweise zeigt **Fig. 12****,** dass die Verbindungsleitung 89 zwischen den Anschlüssen 17 und 35 nicht zwingend außerhalb des Anhängerbremsventils 3 verlaufen muss, sondern vielmehr auch mit Bohrungen oder Kanälen im Inneren des Anhängerbremsventils gebildet sein kann. Weiterhin sind in den Figuren Ausführungsformen enthalten, in denen beispielsweise gemäß Fig. 12 das Löseventil 2, das Anhängerbremsventil 3 und das Parkventil 4 als separate Baueinheiten ausgebildet sind, die aber zu einer gemeinsamen Baueinheit zusammengefügt sind, wobei die Anschlüsse des Löseventils 2, des Anhängerbremsventils 3 und des Parkventils 4 mit der Montage der Bauelemente miteinander verbunden werden können, ohne dass separate Leitungen anzuschließen sind. Ebenfalls denkbar ist die separate Ausbildung von Löseventil 2, Anhängerbremsventil 3 und Parkventil 4 und Herstellung von Verbindungen der jeweiligen Anschlüsse über Leitungen.

Die Ansteuerung des elektrisch betätigbaren Ventils oder der Verriegelungseinrichtung kann in Abhängigkeit davon erfolgen, ob sich der Anhänger im Stillstand befindet oder nicht oder die Geschwindigkeit unter- oder oberhalb einer Schwellgeschwindigkeit liegt. Ebenfalls kann eine Regelung behälterdruckabhängig erfolgen. Von der Regeleinrichtung 6, für die Ansteuerung der Verriegelungseinrichtung 93 und/oder für eine Ansteuerung des Ventils 90 kann zur Unterscheidung einer Notbremssituation und einer Parksituation alternativ zu der Geschwindigkeit des Anhängers eine Anwesenheit eines Fahrers, beispielsweise über einen Sitzplatzbelegungssensor oder einen Türsensor, ein Signal für den Betriebszustand der Brennkraftmaschine (an/aus) oder ähnliches verwendet werden. Ebenfalls möglich ist, dass eine Betätigung der Betätigungseinheit nicht durch pneumatische Anbindung an die Vorratsleitung 11 erfolgt. Vielmehr kann auch ein von der Ankopplung an das Zugfahrzeug oder dem Vorhandensein des Druckes in der Vorratsleitung abhängiges elektrisches Signal verwendet werden, um beispielsweise eine Druckbeaufschlagung des Kolbens der Betätigungseinheit zu sperren oder freizugeben oder über einen elektromagnetischen Aktuator unmittelbar die Betätigung der Betätigungseinheit zu bewirken.

Es versteht sich, dass die Bezeichnungen "Eingang" und "Ausgang" nicht zwingend eine Strömungsrichtung der zugeordneten Anschlüsse bezeichnen. Vielmehr kann zumindest in Teilbetriebsbereichen ein Ausströmen aus einem als "Eingang" bezeichneten Anschluss und ein Einströmen aus einem als "Ausgang" bezeichneten Anschluss erfolgen.

### BEZUGSZEICHENLISTE

- 1: Bremsanlage
- 2: Löseventil
- 3: Anhängerbremsventil
- 4: Parkventil
- 5: Vorratsbehälter
- 6: Regeleinrichtung
- 7: Kombi-Bremszylinder
- 8: Federspeicherbremszylinder
- 9: Betriebsbremszylinder
- 10: Kupplungskopf Vorrat
- 11: Vorratsleitung
- 12: Kupplungskopf Bremse
- 13: Bremssteuerleitung
- 14: Wechselventil
- 15: Rückschlagventil
- 16: Anschluss Löseventil
- 17: Anschluss Löseventil
- 18: Anschluss Löseventil
- 19: Druckraum
- 20: Steuerschieber
- 21: Betätigungsorgan
- 22: Anschluss
- 23: Anschluss
- 24: Anschluss
- 25: Behälter Nebenverbraucher
- 26: Anschluss
- 27: Anschluss
- 28: Anschluss
- 29: Anschluss
- 30: Anschluss
- 31: Steuerleitung
- 32: Leitung
- 33: zweiter Eingang Wechselventil
- 34: Anschluss Parkventil
- 35: Anschluss Parkventil
- 36: Anschluss Parkventil
- 37: erster Eingang Wechselventil
- 38: Ausgang
- 39: Anschluss
- 40: Gehäuse
- 41: Steuerelement
- 42: Feder
- 43: Ventilsitz
- 44: Ventil
- 45: Ausnehmung
- 46: Kolben
- 47: Ringkammer
- 48: Ringkammer
- 49: Rückschlagventil
- 50: Kammer
- 51: Bohrung
- 52: Ventil
- 53: Bund
- 54: Ventilsitz
- 55: Ventilkörper
- 56: Rückschlagventil
- 57: Feder
- 58: Steuereinheit
- 59: Bohrung
- 60: Gehäuse
- 61: Ventilelement
- 62: Entlüftungskammer
- 63: Entlüftung
- 64: Steuerkante
- 65: Steuerkante
- 66: Ringkammer
- 67: Betätigungsorgan
- 68: Betätigungseinheit
- 69: Bohrung
- 70: Trennwand
- 71: Fortsatz
- 72: Kolben
- 73: Betätigungskammer
- 74: Betätigungsfeder
- 75: Sicherungsring
- 76: Ventilelement
- 77: erster Eingang
- 78: Wechselventil
- 79: zweiter Eingang
- 80: Betriebsbremsleitung
- 81: Ausgang
- 82: Schnelllöseventil
- 83: Feststellbremsleitung
- 84: Baueinheit
- 85: Ausgang
- 86: weiteres Wechselventil
- 87: erster Eingang
- 88: zweiter Eingang
- 89: Verbindungsleitung
- 90: elektrisch betätigbares Ventil
- 91: Steuerleitung
- 92: Verbindungsleitung
- 93: Verriegelungseinrichtung

## Patentansprüche

1. Bremsanlage (1) für einen Anhänger eines Kraftfahrzeugs mit
a) einer Regeleinrichtung (6) zur Durchführung eines geregelten Bremsvorganges über Betriebsbremszylinder (9),
b) einem Anhängerbremsventil (3) mit Notbremsfunktion, über die mit einem Abfall des Druckes in einer Vorratsleitung (11) automatisch eine geregelte Notbremsung über Betriebsbremszylinder (9) eingeleitet wird,
c) einem Parkventil (4)
ca) mit einer Steuereinheit (58), über die in einer Entlüftungsstellung eine Entlüftung eines Federspeicherbremszylinders (8) ermöglicht ist, und
cb) mit einer automatischen Betätigungseinheit (68), die bei Abfall des Drucks in der Vorratsleitung (11) für ruhendes Kraftfahrzeug die Steuereinheit (58) automatisiert in die Entlüftungsstellung überführt,
d) Bauelementen, durch die für sich bewegendes Kraftfahrzeug in einer Notbremssituation mit Verringerung oder Entfall des Drucks in der Vorratsleitung (11) da) eine Verhinderung der automatischen Entlüftung des Federspeicherbremszylinders (8) durch die Betätigungseinheit (68) des Parkventils (4) erfolgt und db) ein geregelter Bremsvorgang über die Betriebsbremszylinder (9) ermöglicht ist,
e) wobei die Regeleinrichtung (6) mit einem Wechselventil (78) eine Baueinheit (84) bildet, wobei von dem Wechselventil (78)
ea) ein erster Eingang (77) mit einem Anschluss (36) des Parkventils (4) verbunden ist, welcher in der Entlüftungsstellung entlüftet ist,
eb) ein zweiter Eingang (79) mit einem mit dem Betriebsbremszylinder (9) verbundenen Anschluss der Regeleinrichtung (6) verbunden ist und
ec) ein Ausgang (81) mit dem Federspeicherbremszylinder (8) verbunden ist, und
f) ein weiteres Wechselventil (86) vorgesehen ist, von dem
fa) ein erster Eingang (87) in der Entlüftungsstellung des Parkventils (4) entlüftet werden kann,
fb) ein zweiter Eingang (88) mit einer Steuerleitung (31) der Regeleinrichtung (6) verbunden ist,
fc) ein Ausgang (85) mit dem ersten Eingang (77) des Wechselventils (78), welches mit der Regeleinrichtung (6) eine Baueinheit (84) bildet, verbunden ist.

2. Bremsanlage (1) nach Anspruch 1, **dadurch gekennzeichnet, dass** die Regeleinrichtung (6) mit der Detektion eines Abrisses der Vorratsleitung (11) oder eines Abfalls des Drucks in der Vorratsleitung (11) automatisiert einen geregelten Bremsvorgang über die Betriebsbremszylinder (9) initiiert.

3. Bremsanlage nach Anspruch 1 oder 2, **dadurch gekennzeichnet, dass** das weitere Wechselventil (86) in das Parkventil (4) integriert ist.

4. Bremsanlage (1) für einen Anhänger eines Kraftfahrzeugs mit
a) einer Regeleinrichtung (6) zur Durchführung eines geregelten Bremsvorganges über Betriebsbremszylinder (9),
b) einem Anhängerbremsventil (3) mit Notbremsfunktion, über die mit einem Abfall des Druckes in einer Vorratsleitung (11) automatisch eine geregelte Notbremsung über Betriebsbremszylinder (9) eingeleitet wird,
c) einem Parkventil (4)
ca) mit einer Steuereinheit (58), über die in einer Entlüftungsstellung eines Ventilelements (61) eine Entlüftung eines Federspeicherbremszylinders (8) ermöglicht ist, und
cb) mit einer automatischen Betätigungseinheit (68), die bei Abfall des Drucks in der Vorratsleitung (11) für ruhendes Kraftfahrzeug die Steuereinheit (58) automatisiert in die Entlüftungsstellung überführt,
d) Bauelementen, durch die für sich bewegendes Kraftfahrzeug in einer Notbremssituation mit Verringerung oder Entfall des Drucks in der Vorratsleitung (11)
da) eine Verhinderung der automatischen Entlüftung des Federspeicherbremszylinders (8) durch die Betätigungseinheit (68) des Parkventils (4) erfolgt und
db) ein geregelter Bremsvorgang über die Betriebsbremszylinder (9) ermöglicht ist,
e) wobei die durch die Betätigungseinheit (68) des Parkventils (4) verursachte automatische Entlüftung des Federspeicherbremszylinders (8) für sich bewegendes Kraftfahrzeug in einer Notbremssituation mit Verringerung oder Entfall des Drucks in der Vorratsleitung (11) durch eine elektrisch schaltbares Ventil (90) verhindert ist, dessen elektrisches Steuersignal von einem erkannten Fahrzustand abhängig ist.

5. Bremsanlage (1) nach Anspruch 4, **dadurch gekennzeichnet, dass** das elektrisch schaltbare Ventil (90) ein elektrisch betätigbares Sperrventil ist.

6. Bremsanlage (1) nach Anspruch 4 oder 5, **dadurch gekennzeichnet, dass**
a) die Betätigungseinheit (68) einen über eine Betätigungsfeder (74) abgestützten Kolben (72) aufweist, der vom Druck in der Vorratsleitung (11) beaufschlagt ist, wobei bei Abfall des Drucks in der Vorratsleitung (11) für ruhendes Fahrzeug die Betätigungsfeder (74) das Ventilelement (61) in Richtung der Entlüftungsstellung beaufschlagt, und
b) das elektrisch schaltbare Ventil (90) in einer Leitung für eine Zufuhr des Druckes in der Vorratsleitung (11) zu dem Kolben (72) der automatischen Betätigungseinheit (68) angeordnet ist.

7. Bremsanlage (1) nach Anspruch 4 oder 5, **dadurch gekennzeichnet, dass**
a) die Betätigungseinheit (68) einen über eine Betätigungsfeder (74) abgestützten Kolben (72) aufweist, der vom Druck in der Vorratsleitung (11) beaufschlagt ist, wobei bei Abfall des Drucks in der Vorratsleitung (11) für ruhendes Fahrzeug die Betätigungsfeder (74) das Ventilelement (61) in Richtung der Entlüftungsstellung beaufschlagt, und
b) das elektrisch schaltbare Ventil (90) in einer Leitung zwischen dem Parkventil (4) und dem Wechselventil (78; 86) angeordnet ist.

8. Bremsanlage (1) nach Anspruch 4 oder 5, **dadurch gekennzeichnet, dass**
a) die Betätigungseinheit (68) einen über eine Betätigungsfeder (74) abgestützten Kolben (72) aufweist, der vom Druck in der Vorratsleitung (11) beaufschlagt ist, wobei bei Abfall des Drucks in der Vorratsleitung (11) für ruhendes Fahrzeug die Betätigungsfeder (74) das Ventilelement (61) in Richtung der Entlüftungsstellung beaufschlagt, und
b) das elektrisch schaltbare Ventil (90) in einer Leitung zwischen einer mit der Regeleinrichtung (6) und einem Wechselventil (78) gebildeten Baueinheit (84) und dem Federspeicherbremszylinder (8) angeordnet ist.

9. Bremsanlage (1) für einen Anhänger eines Kraftfahrzeugs mit
a) einer Regeleinrichtung (6) zur Durchführung eines geregelten Bremsvorganges über Betriebsbremszylinder (9),
b) einem Anhängerbremsventil (3) mit Notbremsfunktion, über die mit einem Abfall des Druckes in einer Vorratsleitung (11) automatisch eine geregelte Notbremsung über Betriebsbremszylinder (9) eingeleitet wird,
c) einem Parkventil (4)
ca) mit einer Steuereinheit (58), über die in einer Entlüftungsstellung eines Ventilelements (61) eine Entlüftung eines Federspeicherbremszylinders (8) ermöglicht ist, und
cb) mit einer automatischen Betätigungseinheit (68), die einen über eine Betätigungsfeder (74) abgestützten Kolben (72) aufweist, der vom Druck in der Vorratsleitung (11) beaufschlagt ist, wobei bei Abfall des Drucks in der Vorratsleitung (11) für ruhendes Fahrzeug die Betätigungsfeder (74) das Ventilelement (61) in Richtung der Entlüftungsstellung beaufschlagt,
d) Bauelementen, durch die für sich bewegendes Kraftfahrzeug in einer Notbremssituation mit Verringerung oder Entfall des Drucks in der Vorratsleitung (11)
da) eine Verhinderung der automatischen Entlüftung des Federspeicherbremszylinders (8) durch die Betätigungseinheit (68) des Parkventils (4) erfolgt und
db) ein geregelter Bremsvorgang über die Betriebsbremszylinder (9) ermöglicht ist,
e) wobei zur Verhinderung der automatischen Entlüftung des Federspeicherbremszylinders (8) durch die automatische Betätigungseinheit (68) des Parkventils (4) eine Verriegelungseinrichtung (93) vorgesehen ist, mit der der Kolben (72) der Betätigungseinheit (68) verriegelbar ist.

10. Bremsanlage (1) nach Anspruch 9, **dadurch gekennzeichnet, dass** die Verriegelung und/oder Entriegelung der Verriegelungseinrichtung (93) über die Regeleinrichtung (6) erfolgt.

## Claims

1. Brake system (1) for a trailer of a vehicle with
a) a control device (6) for performing a controlled braking process with service brake cylinders (9),
b) a trailer brake valve (3) providing an emergency brake function for automatically initiating a controlled emergency brake action via service brake cylinders (9) in case of a pressure in a supply line (11) decreasing or dropping
c) a parking valve (4),
ca) with a control unit (58) for providing a deaerating of the spring brake cylinders in a deaerating position and
cb) with an automatic actuation unit (68) automatically transferring the control unit (58) into the deaerating position in case of a decrease or drop of the pressure in the supply line (11) for resting vehicle,
d) components for
da) preventing the automatic deaerating of the spring brake cylinders (8) by the actuation unit (68) of the parking valve (4) and
db) providing a controlled braking process with the service brake cylinders (9) for moving vehicle in an emergency brake situation with a decrease, drop or removal of pressure in the supply line (11),
e) wherein the control unit (6) builds an assembly unit (84) with a shuttle valve (78), wherein
ea) a first input (77) of the shuttle valve (78) is connected with a port (36) of the parking valve (4), wherein the port (36) is deaerated in the deaerating position,
eb) a second input (79) of the shuttle valve (78) is connected with a port of the control unit (6) connected with the service brake cylinder (9) and
ec) an output (81) of the shuttle valve (78) is connected with the spring brake cylinder (8) and
f) another shuttle valve (86) is provided, wherein
fa) it is possible that a first input (87) is deaerated in the deaerated position of the parking valve (4),
fb) a second input (88) of the shuttle valve (86) is connected with a control or pilot line (31) of the control unit (6) and
fc) an output (85) of the shuttle valve (86) is connected with the first input (77) of the shuttle valve (78) which builds an assembly unit (84) with the control unit (6).

2. Brake system (1) of claim 1, wherein the control unit (6) with the detection of a demolition or loss of the supply line (11) or a decrease or drop of the pressure in the supply line (11) automatically initiates a controlled braking process via the service brake cylinders (9).

3. Brake system (1) of claim 1 or 2, wherein the shuttle valve (86) is integrated into the parking valve (4).

4. Brake system (1) for a trailer of a vehicle with
a) a control unit (6) for performing a controlled braking process via service brake cylinders (9),
b) a trailer brake valve (3) comprising an emergency brake function for automatically initiating a controlled emergency brake process via service brake cylinders (9) with a decrease or drop of the pressure in a supply line (11),
c) a parking valve (4)
ca) with a control unit (58) for deaerating a spring brake cylinder (8) in a deaerating position of a valve element ((61) and
cb) with an automatic actuation unit (68) for automatically transferring the control unit (58) into the deaerating position with a decrease or drop of the pressure in the supply line (11) for resting vehicle,
d) components for
da) avoiding the automatic deaerating of the spring brake cylinders (8) by the actuation unit (68) of the parking valve (4) and
db) providing a controlled braking process via the service brake cylinders (9)
for moving vehicle in an emergency brake situation with a decrease or removal of pressure in the supply line (11),
e) wherein the automatic deaerating of the spring brake cylinders (8) caused by the actuation unit (68) of the parking valve (4) for moving vehicle in an emergency brake situation with a decrease, drop or removal of pressure in the supply line (11) is avoided by an electrical switchable valve (90) having an electrical control signal which is dependent on a detected driving state.

5. Brake system (1) of claim 4, wherein the electrical switchable valve (90) is an electrical actuatable stop valve or shut-off valve.

6. Brake system (1) of claim 4 or 5, wherein
a) the actuation unit (68) comprises a piston (72) supported by an actuating spring (74), wherein the piston (72) is biased by the pressure in the supply line (11) and wherein with a decrease of pressure in the supply line (11) for resting vehicle the actuating spring (74) biases the valve element (61) versus the deaerating position, and
b) the electrical switchable valve (90) is located in a line for transmitting the pressure in the supply line (11) to the piston (72) of the automatic actuation unit (68).

7. Brake system (1) of claim 4 or 5, wherein
a) the actuation unit (68) comprises a piston (72) supported by an actuating spring (74), wherein the piston (72) is biased by the pressure in the supply line (11) and wherein with a decrease of the pressure in the supply line (11) for resting vehicle the actuating spring (74) biases the valve element (61) versus the deaerating position, and
b) the electrical switchable valve (90) is located in a line between the parking valve (4) and the shuttle valve (78; 86).

8. Brake system (1) of claim 4 0 5, wherein
a) the actuation unit (68) comprises a piston (72) supported by an actuating spring (74), wherein the piston (72) is biased by the pressure in the supply line (11) and wherein with a decrease of the pressure in the supply line (11) for resting vehicle the actuating spring (74) biases the valve element (61) versus the deaerating position, and
b) the electrical switchable valve (90) is located in a line between the spring brake cylinder (8) and an assembly unit (84) built with the control unit (6) and a shuttle valve (78).

9. Brake system (1) for a trailer of a vehicle with
a) a control unit (6) for performing a controlled braking process via service brake cylinders (9),
b) a trailer brake valve (3) providing an emergency brake function for automatically initiating a controlled emergency brake action via service brake cylinders (9) with a decrease or drop of the pressure in a supply line (11),
c) a parking valve (4)
ca) with a control unit (58) providing to deaerate a spring brake cylinder (8) in a deaerating position of a valve element (61), and
cb) with an automatic actuation unit (68) comprising a piston (72) supported by an actuating spring (74), wherein the piston (72) is biased by pressure from the supply line (11) and wherein with a decrease of pressure in the supply line (11) for resting vehicle the actuating spring (74) biases the valve element (61) versus the deaerating position,
d) components for
da) avoiding an automatic deaerating of the spring brake cylinder (8) by the actuation unit (68) of the parking valve (4) and
db) providing the option of a controlled brake process via the service brake cylinders (9)
for moving vehicle in an emergency brake situation with a decrease, drop or removal of pressure in the supply line (11),
e) wherein for avoiding the automatic deaerating of the spring brake cylinder (8) by the automatic actuation unit (68) of the parking valve (4) a resting or locking unit (93) is provided for resting or locking the piston (72) of the actuation unit (68).

10. Brake system (1) of claim 9, wherein the resting or locking unit (93) is rested or locked and/or unrested or unlocked by the control unit (6).

## Revendications

1. Installation de freinage (1) pour une remorque d'un véhicule automobile, comportant
a) un dispositif de réglage (6) pour la mise en oeuvre d'un processus de freinage contrôlé, par l'intermédiaire du cylindre de frein de service (9),
b) une vanne de frein de la remorque (3) avec une fonction de frein d'urgence, par l'intermédiaire de laquelle un freinage d'urgence contrôlé est introduit automatiquement via le cylindre de frein de service (9) en présence d'une chute de la pression dans une conduite d'alimentation (11),
c) une vanne de frein de stationnement (4)
ca) avec une unité de commande (58), par l'intermédiaire de laquelle une purge d'air dans un cylindre de frein à accumulateur (8) est possible dans une position de purge d'air, et
cb) avec une unité d'actionnement (68) automatique qui, en présence d'une chute de la pression dans la conduite d'alimentation (11) pour un véhicule automobile à l'arrêt, amène l'unité de commande (58) de manière automatisée dans la position de purge d'air,
d) des éléments fonctionnels, par lesquels, pour un véhicule automobile se déplaçant dans une situation de freinage d'urgence avec une diminution ou une suppression de la pression dans la conduite d'alimentation (11),
da) est empêchée la purge d'air automatique du cylindre de frein à accumulateur (8) par l'intermédiaire de l'unité d'actionnement (68) de la vanne de frein de stationnement (4),
db) est possible un processus de freinage contrôlé par l'intermédiaire du cylindre de frein de service (9),
e) sachant que le dispositif de réglage (6) forme avec un sélecteur de circuit (78) une unité (84), sachant que
ea) une première entrée (77) du sélecteur de circuit (78) est reliée à un raccord (36) de la vanne de frein de stationnement (4), qui est purgé dans la position de purge d'air,
eb) une deuxième entrée (79) du sélecteur de circuit (78) est reliée à un raccord, relié au cylindre de frein de service (9), du dispositif de réglage (6), et
ec) une sortie (81) du sélecteur de circuit (78) est reliée au cylindre de frein à accumulateur (8), et
f) il est prévu un sélecteur de circuit (86) supplémentaire, dont
fa) une première entrée (87) peut être purgée dans la position de purge d'air de la vanne de frein de stationnement (4),
fb) une deuxième entrée (88) est reliée à une ligne de commande (31) du dispositif de réglage (6),
fc) une sortie (85) est reliée à la première entrée (77) du sélecteur de circuit (78) qui, avec le dispositif de réglage (6), forme une unité (84).

2. Installation de freinage (1) selon la revendication 1, **caractérisée en ce que** le dispositif de réglage (6), au moment de la détection d'une rupture de la conduite d'alimentation (11) ou d'une chute de la pression dans la conduite d'alimentation (11) initie de manière automatisée un processus de freinage contrôlé, par l'intermédiaire du cylindre de frein de service (9).

3. Installation de freinage (1) selon la revendication 1 ou 2, **caractérisée en ce que** la sélecteur de circuit (86) supplémentaire est intégré dans la vanne de frein de stationnement (4).

4. Installation de freinage (1) pour une remorque d'un véhicule automobile, comportant
a) un dispositif de réglage (6) pour la mise en oeuvre d'un processus de freinage contrôlé, par l'intermédiaire du cylindre de frein de service (9),
b) une vanne de frein de la remorque (3) avec une fonction de frein d'urgence, par l'intermédiaire de laquelle un freinage d'urgence contrôlé est introduit automatiquement via le cylindre de frein de service (9) en présence d'une chute de la pression dans une conduite d'alimentation (11),
c) une vanne de frein de stationnement (4)
ca) avec une unité de commande (58), par l'intermédiaire de laquelle une purge d'air dans un cylindre de frein à accumulateur (8) est possible dans une position de purge d'air d'un élément de vanne (61), et
cb) avec une unité d'actionnement (68) automatique qui, en présence d'une chute de la pression dans la conduite d'alimentation (11) pour un véhicule automobile à l'arrêt, amène l'unité de commande (58) de manière automatisée dans la position de purge d'air,
d) des éléments fonctionnels, par lesquels, pour un véhicule automobile se déplaçant dans une situation de freinage d'urgence avec une diminution ou une suppression de la pression dans la conduite d'alimentation (11),
da) est empêchée la purge d'air automatique du cylindre de frein à accumulateur (8) par l'intermédiaire de l'unité d'actionnement (68) de la vanne de frein de stationnement (4),
db) est possible un processus de freinage contrôlé, par l'intermédiaire du cylindre de frein de service (9),
e) sachant que la purge d'air automatique du cylindre de frein à accumulateur (8), induite par l'unité d'actionnement (68) de la vanne de frein de stationnement (4), pour un véhicule automobile se déplaçant dans une situation de freinage d'urgence avec diminution ou suppression de la pression dans la conduite d'alimentation (11), est empêchée par une vanne (90) à commutation électrique, dont le signal de commande électrique dépend d'une situation de conduite détectée.

5. Installation de freinage (1) selon la revendication 4, **caractérisée en ce que** la vanne (90) à commutation électrique est une vanne d'arrêt actionnée électriquement.

6. Installation de freinage (1) selon la revendication 4 ou 5, **caractérisée en ce que**
a) l'unité d'actionnement (68) comporte un piston (72), qui est supporté par un ressort de manoeuvre (74) et qui est sollicité par la pression à l'intérieur de la conduite d'alimentation (11), sachant qu'en présence d'une chute de la pression dans la conduite d'alimentation (11) pour un véhicule automobile à l'arrêt, le ressort de manoeuvre (74) sollicite l'élément de vanne (61) en direction de la position de purge d'air, et
b) la vanne (90) à commutation électrique est agencée dans une conduite pour acheminer la pression dans la conduite d'alimentation (11) vers le piston (72) de l'unité de manoeuvre (68) automatique.

7. Installation de freinage (1) selon la revendication 4 ou 5, **caractérisée en ce que**
a) l'unité d'actionnement (68) comporte un piston (72), qui est supporté par un ressort de manoeuvre (74) et qui est sollicité par la pression à l'intérieur de la conduite d'alimentation (11), sachant qu'en présence d'une chute de la pression dans la conduite d'alimentation (11) pour un véhicule automobile à l'arrêt, le ressort de manoeuvre (74) sollicite l'élément de vanne (61) en direction de la position de purge d'air, et
b) la vanne (90) à commutation électrique est agencée dans une conduite entre la vanne de frein de stationnement (4) et le sélecteur de circuit (78 ; 86).

8. Installation de freinage (1) selon la revendication 4 ou 5, **caractérisée en ce que**
a) l'unité d'actionnement (68) comporte un piston (72), qui est supporté par un ressort de manoeuvre (74) et qui est sollicité par la pression à l'intérieur de la conduite d'alimentation (11), sachant qu'en présence d'une chute de la pression dans la conduite d'alimentation (11) pour un véhicule automobile à l'arrêt, le ressort de manoeuvre (74) sollicite l'élément de vanne (61) en direction de la position de purge d'air, et
b) la vanne (90) à commutation électrique est agencée dans une conduite entre une unité (84), formée par le dispositif de réglage (6) et un sélecteur de circuit (78), et le cylindre de frein à accumulateur (8).

9. Installation de freinage (1) pour une remorque d'un véhicule automobile, comportant
a) un dispositif de réglage (6) pour la mise en oeuvre d'un processus de freinage contrôlé, par l'intermédiaire du cylindre de frein de service (9),
b) une vanne de frein de la remorque (3) avec une fonction de frein d'urgence, par l'intermédiaire de laquelle un freinage d'urgence contrôlé est introduit automatiquement via le cylindre de frein de service (9) en présence d'une chute de la pression dans une conduite d'alimentation (11),
c) une vanne de frein de stationnement (4)
ca) avec une unité de commande (58), par l'intermédiaire de laquelle une purge d'air dans un cylindre de frein à accumulateur (8) est possible dans une position de purge d'air d'un élément de vanne (61), et
cb) avec une unité d'actionnement (68) automatique, qui comporte un piston (72), qui est supporté par un ressort de manoeuvre (74) et qui est sollicité par la pression à l'intérieur de la conduite d'alimentation (11), sachant qu'en présence d'une chute de la pression dans la conduite d'alimentation (11) pour un véhicule automobile à l'arrêt, l'élément de vanne (61) est sollicité en direction de la position de purge d'air,
d) des éléments fonctionnels, par lesquels, pour un véhicule automobile se déplaçant dans une situation de freinage d'urgence avec une diminution ou une suppression de la pression dans la conduite d'alimentation (11),
da) est empêchée la purge d'air automatique dans le cylindre de frein à accumulateur (8) par l'intermédiaire de l'unité d'actionnement (68) de la vanne de frein de stationnement (4), et
db) est possible un processus de freinage contrôlé, par l'intermédiaire du cylindre de frein de service (9),
e) sachant que pour empêcher la purge d'air automatique du cylindre de frein à accumulateur (8) par l'intermédiaire de l'unité d'actionnement (68) de la vanne de frein de stationnement (4), il est prévu un dispositif de verrouillage (93) par lequel le piston (72) de l'unité d'actionnement (68) peut être verrouillé.

10. Installation de freinage (1) selon la revendication 9, **caractérisée en ce que** le verrouillage et/ou le déverrouillage du dispositif de verrouillage (93) sont effectués par l'intermédiaire du dispositif de réglage (6).
